Europäisches Patentamt

European Patent Office

Office européen des brevets

(11) Veröffentlichungsnummer : **0 074 148**
**B1**

(12) **EUROPÄISCHE PATENTSCHRIFT**

(45) Veröffentlichungstag der Patentschrift :
06.07.88

(51) Int. Cl.⁴ : **G 11 B 15/66**

(21) Anmeldenummer : 82201084.9

(22) Anmeldetag : 06.09.82

(54) Aufzeichnungs- und/oder Wiedergabegerät.

(30) Priorität : 08.09.81 AT 3884/81
11.03.82 AT 978/82

(43) Veröffentlichungstag der Anmeldung :
16.03.83 Patentblatt 83/11

(45) Bekanntmachung des Hinweises auf die Patenterteilung : 06.07.88 Patentblatt 88/27

(84) Benannte Vertragsstaaten :
AT DE FR GB IT

(56) Entgegenhaltungen :
EP-A- 0 024 361
US-A- 3 660 614
US-A- 4 138 699

(73) Patentinhaber : N.V. Philips' Gloeilampenfabrieken
Groenewoudseweg 1
NL-5621 BA Eindhoven (NL)

(72) Erfinder : Erhart, Georg
P/A INT.OCTROOIBUREAU B.V. Prof.Holstlaan 6
NL-5656 AA Eindhoven (NL)

(74) Vertreter : Van Weele, Paul Johannes Frits et al
INTERNATIONAAL OCTROOIBUREAU B.V. Prof. Holstlaan 6
NL-5656 AA Eindhoven (NL)

**Beschreibung**

Die Erfindung betrifft ein Aufzeichnungs- und/ oder Wiedergabegerät für einen bandförmigen Aufzeichnungsträger mit mindestens einer zwischen einer Ruhelage und einer Betriebslage entlang einer vorgegebenen Bewegungsbahn verstellbaren Bandführungseinrichtung, die mindestens eine auf einem Trägerteil angeordnete Bandführung aufweist und die zu ihrer räumlichen Positionierung in ihrer Betriebslage an eine Positioniereinrichtung kraftschlüssig angelegt gehalten ist und zu deren Verstellung ein von einer Antriebseinrichtung her antreibbarer Antriebsteil mit ihrem Trägerteil über eine lösbare Kupplung gekuppelt ist, wobei die Kupplung einander gegenüberliegende, in der Verstellungsrichtung wirksame Kupplungsanschläge aufweist, die bei einer Verstellung der Bandführungseinrichtung kraftschlüssig aneinander anliegen und in deren Betriebslage voneinander abgehoben sind. Ein derartiges Gerät ist beispielsweise aus der AT-B-362 161 bekannt.

Bei diesem bekannten Gerät ist die lösbare Kupplung zwischen dem Antriebsteil und dem Trägerteil mit Spiel ausgebildet, so dass bei einer Verstellung der Bandführungseinrichtung zwischen ihrer Ruhelage und ihrer Betriebslage die räumliche Lage des Trägerteiles samt der darauf angebrachten Bandführung von dem Antriebsteil nicht festgelegt ist. Eine genaue Festlegung der Lage der Bandführung bei deren Verstellung ist aber für eine einwandfreie und störungssichere Mitnahme des Aufzeichnungsträgers von wesentlicher Bedeutung. Aus diesem Grunde ist bei dem bekannten Gerät zur Festlegung der räumlichen Lage des Trägerteils für die Bandführung bei einer Verstellung der Bandführungseinrichtung eine als U-förmige Wanne mit Führungsnuten ausgebildete separate Führungseinrichtung für den Trägerteil vorgesehen. Eine solche separate Führungseinrichtung stellt aber einen zusätzlichen Aufwand dar und nimmt ausserdem einen erheblichen Raumbedarf in Anspruch. In der Betriebslage der Bandführungseinrichtung heben der Antriebsteil und der Trägerteil unter Lösung der Kupplung voneinander ab, wobei dann die Bandführungseinrichtung vom Antriebsteil unbehindert und unbeeinflusst mit Hilfe einer Positioniereinrichtung positioniert wird. Hierbei ist bei dem bekannten Gerät zum kraftschlüssigen Anlegen der sich in ihrer Betreibslage befindenden Bandführungseinrichtung an die Positioniereinrichtung eine separate Andruckeinrichtung vorgesehen, was ebenfalls einen beträchtlichen Aufwand und einen erhöhten Raumbedarf erfordert und ausserdem einen relativ komplizierten Aufbau mit sich bringt.

Die Erfindung hat sich zur Vermeidung vorstehend angeführter Schwierigkeiten zur Aufgabe gestellt, ein Gerät eingangs angeführter Art so zu verbessern, dass der Trägerteil der Bandführungseinrichtung ohne separate Hilfsmittel unmittelbar durch den Antriebsteil in seiner räumlichen Lage genau festgelegt ist und dass zum kraftschlüssigen Anlegen der Bandführungseinrichtung an die Positioniereinrichtung keine separate Andruckeinrichtung notwendig ist. Hierzu ist die Erfindung dadurch gekennzeichnet, dass zwischen dem Antriebsteil und dem Trägerteil mindestens eine Feder wirksam ist, die den Antriebsteil und den Trägerteil im wesentlichen in der Verstellungsrichtung gegeneinander verspannt, wobei die Kupplungsanschläge bei aus ihrer Betriebslage verstellter Bandführungseinrichtung stets kraftschlüssig aneinander anliegen, und die bei sich in der Betriebslage befindender Bandführungseinrichtung diese an die Positioniereinrichtung kraftschlüssig angelegt hält, wobei der Antriebsteil gegenüber dem Trägerteil bei gelöster Kupplung mit Überhub verstellt ist. Dadurch, dass die Kupplungsanschläge der lösbaren Kupplung aufgrund der Wirkung der Feder bei sich ausserhalb ihrer Betriebslage befindender Bandführungseinrichtung stets kraftschlüssig aneinander anliegen, so dass zwischen den Kupplungsanschlägen kein Spiel auftritt, ist erreicht, dass die räumliche Lage des Trägerteiles der Bandführungseinrichtung samt der darauf angebrachten Bandführung unmittelbar durch den Antriebsteil genau und sicher festgelegt ist, wobei sich eine separate Führungseinrichtung für den Trägerteil erübrigt. Hierdurch ist eine besonders einfache, raumsparende Ausbildung erreicht, die eine einwandfreie und sichere Mitnahme des Aufzeichnungsträgers bei einer Verstellung der Bandführungseinrichtung zwischen ihrer Ruhelage und ihrer Betriebslage gewährleistet. Bei sich in ihrer Betriebslage befindender Bandführungseinrichtung ist die zwischen dem Antriebsteil und dem Trägerteil wirksame Feder zusätzlich dazu ausgenützt, die Bandführungseinrichtung kraftschlüssig an die Positionierungseinrichtung angelegt zu halten, wodurch sich eine separate Andruckeinrichtung erübrigt und auch in dieser Hinsicht ein besonders einfacher, betriebssicherer und raumsparender Aufbau erreicht ist. Da bei sich in ihrer Betriebslage befindender Bandführungseinrichtung der Antriebsteil gegenüber dem Trägerteil mit Überhub verstellt ist, sind hierbei die Kupplungsanschläge unter Lösung der Kupplung zwischen dem Antriebsteil und dem Trägerteil der Bandführungseinrichtung voneinander abgehoben und steht der Trägerteil nur mehr über die Feder mit dem Antriebsteil in Verbindung. Auf diese Weise ist erreicht, dass die Bandführungseinrichtung vom Antriebsteil praktisch unbeeinflusst und unbehindert in ihrer Betriebslage mit Hilfe der Positioniereinrichtung, an die die Bandführungseinrichtung mit der Feder kraftschlüssig angelegt gehalten ist, positioniert wird.

An dieser Stelle sei erwähnt, dass es an sich aus der US-A-3 660 614 bekannt ist, bei einem Aufzeichnungs- und/oder Wiedergabegerät mit einer zwischen einer Ruhelage und einer Betriebslage verstellbaren Bandführungseinrichtung einen Antriebsteil für die Bandführungseinrichtung gegenüber einem Trägerteil für eine Bandführung dieser Bandführungseinrichtung bei sich in ihrer Betriebslage befindender Bandführungseinrichtung mit Überhub zu verstellen, wobei eine zwischen dem Antriebsteil und dem Trägerteil wirksame Feder gespannt wird, die die Bandführungseinrichtung gegen einen Positionieranschlag kraftschlüssig angelegt hält.

Bei diesem bekannten Gerät ist aber im Gegensatz zu dem erfindungsgemässen Gerät der eingangs angeführten Art der Trägerteil mit dem Antriebsteil nicht über eine lösbare Kupplung, sondern über ein durch einen Lagerstift gebildetes Schwenklager unlösbar verbunden. Diese Ausbildung bringt aber den Nachteil mit sich, dass bei in ihrer Betriebslage sich befindender Bandführungseinrichtung deren Trägerteil vom Antriebsteil nicht gelöst werden kann, so dass aber die Positionierung der Bandführungseinrichtung in ihrer Betriebslage nicht unbeeinflusst und unbehindert vom Antriebsteil vorgenommen werden kann, da die Lage des Trägerteiles stets von der Lage des Antriebsteiles abhängig ist. Dies wirkt sich aber im Hinblock auf die Genauigkeit und Reproduzierbarkeit der Positionierung der Bandführungseinrichtung ungünstig aus.

Zwischen dem Antriebsteil und dem Trägerteil kann beispielsweise eine aus drahtförmigem Federmaterial bestehende Schenkelfeder wirksam sein ; auch eine Blattfeder oder eine schraubenförmige Druckfeder sind verwendbar. Selbstverständlich können gegebenenfalls auch mehr als eine Feder vorgesehen sein. Als besonders vorteilhaft hat sich aber erwiesen, wenn als Feder eine auf Zug beanspruchte, im wesentlichen in der Verstellungsrichtung gespannte Schraubenfeder vorgesehen ist, die mit ihren beiden Enden einerseits am Antriebsteil und andererseits am Trägerteil eingehängt ist. Das Vorsehen einer solchen Schraubenfeder hat sich im Hinblick auf einen möglichst geringen Raumbedarf und im Hinblick auf eine einfache Montage als vorteilhaft erwiesen.

Auch im Hinblick auf die Ausbildung der lösbaren Kupplung zwischen dem Antriebsteil und dem Trägerteil sind verschiedene Lösungen möglich. Beispielsweise kann die Kupplung über ein einziges Paar von Kupplungsanschlägen erfolgen, die formschlüssig miteinander zusammenwirken und so die Lage des Trägerteiles am Antriebsteil festlegen. Als vorteilhaft hat sich aber erwiesen, wenn zur Kupplung des Trägerteiles mit dem Antriebsteil zwei quer zur Verstellungsrichtung mit Normalabstand zueinander liegende Paare von Kupplungsanschlägen vorgesehen sind. Auf diese Weise wird eine stabile Kupplung der beiden gekuppelten Teile erzielt, wobei auch die Lage des Trägerteiles am Antriebsteil bei sich ausserhalb ihrer Betriebslage befindender Bandführungseinrichtung über die beiden Paare von Kupplungsanschlägen genau festgelegt ist.

In diesem Zusammenhang hat sich ferner als vorteilhaft erwiesen, wenn die zwei Paare von Kupplungsanschlägen zusätzlich in Verstellungsrichtung mit Normalabstand zueinander liegen. Auf diese Weise ist ein möglichst grosser Abstand zwischen den beiden Paaren von Kupplungsanschlägen erreicht, was im Hinblick auf eine genaue Festlegung der Lage des Trägerteiles am Antriebsteil bei sich ausserhalb ihrer Betriebslage befindender Bandführungseinrichtung als besonders vorteilhaft anzusehen ist.

Die Ausbildung der paarweise zusammenwirkenden Kupplungsanschläge kann auf verschiedene Art und Weise erfolgen. Beispielsweise kann mindestens ein Paar von Kupplungsanschlägen zwei kegelförmige oder auch zwei halbkugelförmige Anschläge aufweisen. Als vorteilhaft hat sich erwiesen, wenn ein Paar von Kupplungsanschlägen als einen Kupplungsanschlag einen im wesentlichen V-förmigen Einschnitt und als anderen Kupplungsanschlag einen in den V-förmigen Einschnitt eingreifenden zylinderförmigen Stift aufweist. Hierdurch ist eine einfache und verschleissarme Ausbildung des Paares von Kupplungsanschlägen erreicht, wobei auch eine genaue Festlegung der Lage des Trägerteiles am Antriebsteil bei sich ausserhalb ihrer Betriebslage befindender Bandführungseinrichtung gewährleistet ist.

Als vorteilhaft hat sich hierbei ferner erwiesen, wenn das andere Paar von Kupplungsanschlägen als einen Kupplungsanschlag eine ebene Stützfläche und als anderen Kupplungsanschlag ebenfalls einen an der ebenen Stützfläche angreifenden zylinderförmigen Stift aufweist, weil sich dabei auch das zweite Paar von Kupplungsanschlägen durch eine sehr einfache Ausbildung auszeichnet.

Als besonders vorteilhaft hat sich erwiesen, wenn die beiden zylinderförmigen Stifte gemeinsam an einem der beiden über die lösbare Kupplung zu kuppelnden Teile und der V-förmige Einschnitt und die ebene Stützfläche am anderen der beiden zu kuppelnden Teile vorgesehen sind. Dies ist im Hinblick auf eine einfache Herstellung günstig, da einerseits beide Stifte und andererseits der Einschnitt und die Stützfläche je in einem Arbeitsvorgang am betreffenden der beiden zu kuppelnden Teile anbringbar sind.

Dabei hat es sich ferner als vorteilhaft erwiesen, wenn der Antriebsteil plattenförmig ausgebildet ist und der V-förmige Einschnitt und die ebene Stützfläche durch begrenzungswände von mindestens einer den plattenförmigen Antriebsteil durchsetzenden Ausnehmung gebildet sind, durch die die am Trägerteil vorgesehenen zylinderförmigen Stifte hindurchgeführt sind. Dies ist im Hinblick auf eine kompakte und raumsparende Ausbildung vorteilhaft. Auch ist der V-förmige Einschnitt und die ebene Stützfläche sehr einfach beispielsweise durch Ausstanzen der betreffenden Ausnehmung im plattenförmigen Antriebsteil anbringbar.

Als vorteilhaft hat sich auch erwiesen, wenn bei Ausbildung eines Kupplungsanschlages als an einem der beiden über die lösbare Kupplung zu kuppelnden Teile vorgesehener zylinderförmiger Stift dieser ein hakenförmig abgewinkeltes freies Ende aufweist, mit dem er den anderen der beiden zu kuppelnden Teile umgreift. Hierdurch ist eine besonders sichere Verbindung des Trägerteiles mit dem Antriebsteil geschaffen, bei der ein ungewolltes Lösen des Trägerteiles vom Antriebsteil in Richtung der zylinderförmigen Stifte praktisch ausgeschlossen ist.

Bei einem Gerät, bei dem die Positioniereinrichtung für die Bandführungseinrichtung einen im wesentlichen in der Verstellungsrichtung wirksamen Anschlag aufweist, wie dies ebenfalls aus der eingangs erwähnten AT-B-362 161 bekannt ist, hat es sich erfindungsgemäss als vorteilhaft erwiesen, wenn der in der Verstellungsrichtung wirksame Anschlag der Positioniereinrichtung ein Auflager für die Bandführungseinrichtung bildet, um das die Bandführungseinrichtung in mindestens einer im wesentlichen quer zur Verstellungsrichtung verlaufenden Schwenkrichtung verschwenkbar ist, wenn die am Trägerteil der Bandführungseinrichtung angreifende Feder die sich in ihrer Betriebslage befindende Bandführungseinrichtung um das Auflager verschwenkt und wenn zur Positionierung der verschwenkten Bandführungseinrichtung die Positioniereinrichtung und die Bandführungseinrichtung mindestens zwei mit Abstand zueinander liegende Paare von im wesentlichen in Schwenkrichtung der Bandführungseinrichtung um das Auflager wirksamen, miteinander zusammenwirkenden Positionieranschlägen aufweisen. Auf diese Weise ist erreicht, dass zur Positionierung der Bandführungseinrichtung in ihrer Betriebslage die am Trägerteil der Bandführungseinrichtung angreifende Feder zusätzlich ein Verschwenken der Bandführungseinrichtung in mindestens einer Schwenkrichtung um das durch den Anschlag der Positioniereinrichtung gebildete Auflager bewirkt und dass die zur Positionierung vorgesehenen, in Schwenkrichtung wirksamen Positionieranschläge bei diesem Verschwenken paarweise aneinander anstossen. Bei diesem Zusammenstossen der Positionieranschläge tritt zwischen den einzelnen Paaren von Positionieranschlägen vorteilhafterweise keine gegenseitige Gleitbewegung auf, was im Hinblick auf eine Ausschaltung der Reibungseinflüsse zwischen den Positionieranschlägen, auf einen geringen Verschleiss und damit lange Lebensdauer und auf eine möglichst exakte Positionierung von Vorteil ist.

Dabei hat es sich als vorteilhaft erwiesen, wenn der in der Verstellungsrichtung wirksame, ein Auflager für die Bandführungseinrichtung bildende Anschlag durch einen an der Positioniereinrichtung vorgesehenen Positionieranschlag eines Paares von Positionieranschlägen gebildet ist. Hierdurch erübrigt es sich, einen separaten Anschlag als Auflager vorzusehen, was einfach und raumsparend ist.

Als vorteilhaft hat es sich auch erwiesen, wenn bei aus ihrer Betriebslage verstellter Bandführungseinrichtung zur Begrenzung einer Relativbewegung des Trägerteiles gegenüber dem Antriebsteil bei zumindest teilweiser Lösung der Kupplung entgegen der Kraft der Feder mindestens ein Paar von miteinander zusammenwirkenden Begrenzungsanschlägen vorgesehen ist, wobei von den paarweise miteinander zusammenwirkenden Begrenzungsanschlägen der eine Begrenzungsanschlag am Trägerteil vorgesehen ist. Hierdurch ist auf sehr einfache und sichere Weise eine Relativbewegung des Trägerteiles gegenüber dem Antriebsteil bei aus ihrer Betriebslage verstellter und daher noch nicht mit Hilfe der Positioniereinrichtung positionierter Bandführungseinrichtung auf einen vorgegebenen Bereich begrenzt, wodurch beispielsweise einer ungewollten gänzlichen Trennung des Trägerteiles vom Antriebsteil vorgebeugt ist.

Als vorteilhaft hat sich hierbei erwiesen, wenn von mindestens einem Paar von Begrenzungsanschlägen der andere Begrenzungsanschlag am Antriebsteil vorgesehen ist. Dies ist besonders einfach und raumsparend, wobei unabhängig von der momentanen Lage der Bandführungseinrichtung bei deren Verstellung stets für eine Begrenzung einer Relativbewegung des Trägerteiles gegenüber dem Antriebsteil gesorgt ist.

Auch hat sich als vorteilhaft erwiesen, wenn von minestens einem Paar von Begrenzungsanschlägen der andere Begrenzungsanschlag geräteseitig ortsfest im Bereich der Bewegungsbahn der Bandführungseinrichtung vorgesehen ist. Ein solcher geräteseitiger Begrenzungsanschlag kann besonders stabil ausgebildet werden und kann daher auch relativ grosse bei einer solchen Begrenzung der Relativbewegung auftretende Kräfte aufnehmen.

Dabei hat sich im Hinblick auf eine möglichst einfache Ausbildung als vorteilhaft erwiesen, wenn der andere Begrenzungsanschlag durch eine im wesentlichen durchgehend sich entlang der Bewegungsbahn der Bandführungseinrichtung erstreckende Anschlagfläche gebildet ist. Auch in diesem Fall ist unabhängig von der momentanen Lage der Bandführungseinrichtung bei deren Verstellung stets für eine Begrenzung einer Relativbewegung des Trägerteiles gegenüber dem Antriebsteil gesorgt.

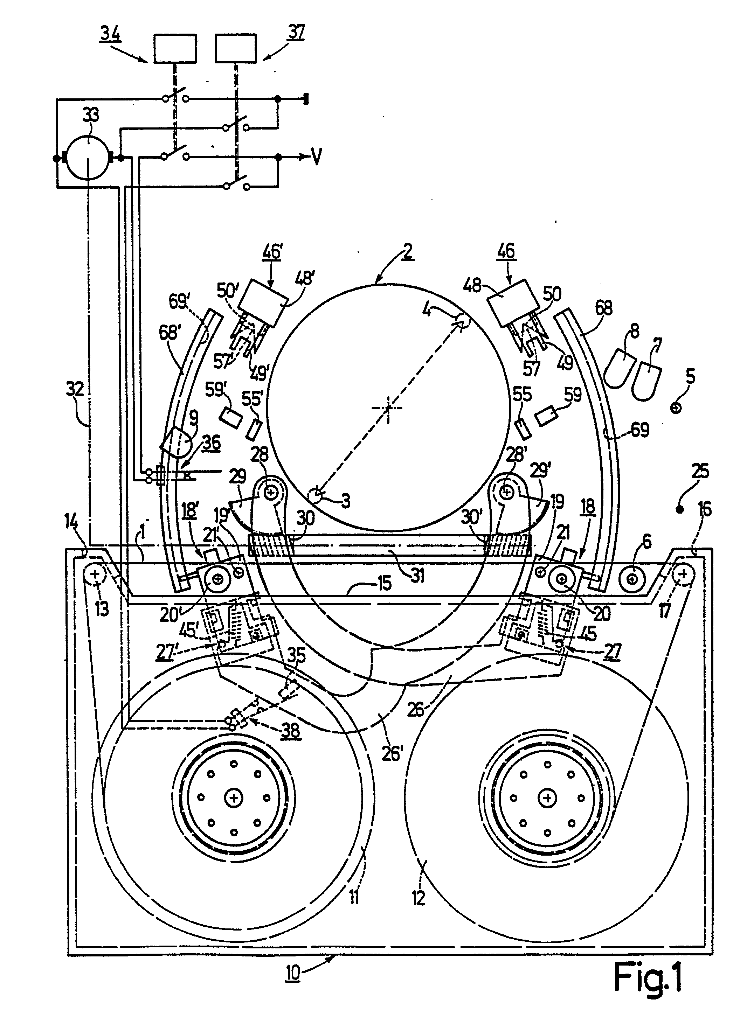

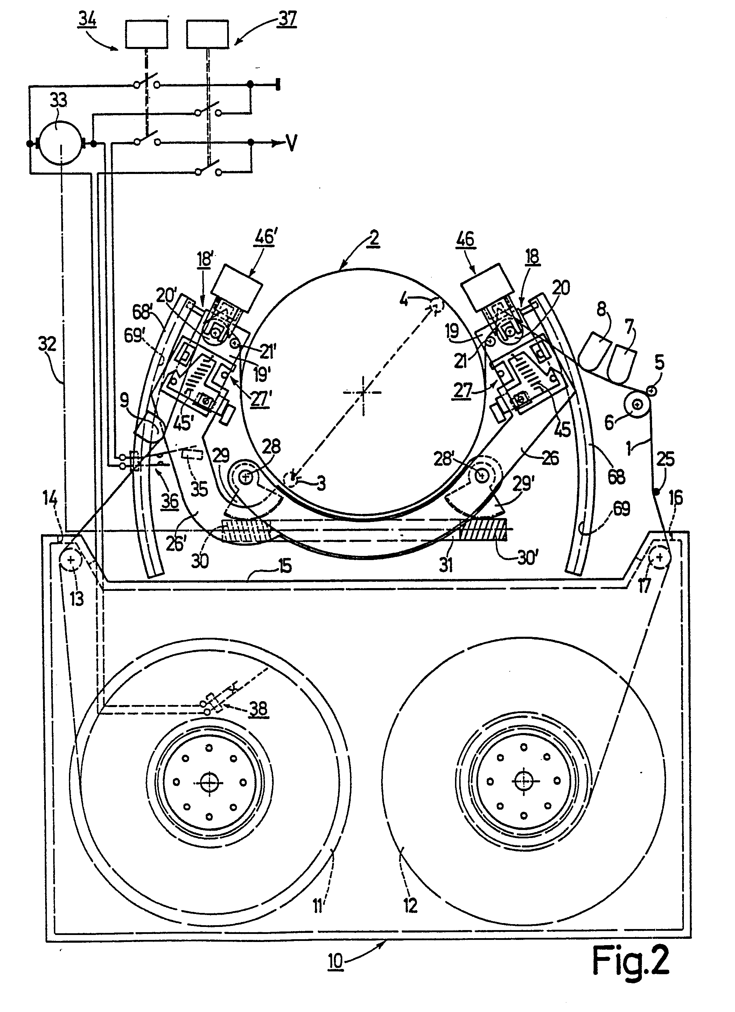

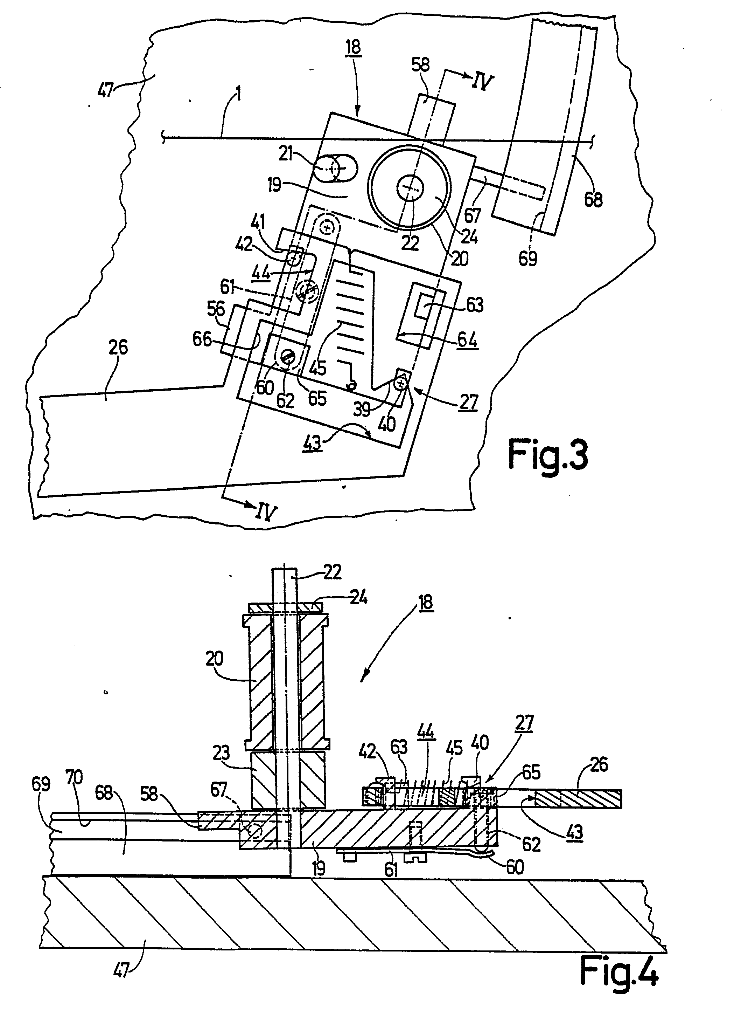

Die Erfindung wird im folgenden anhand von zwei in den Zeichnungen dargestellten Ausführungsbeispielen, auf die sie jedoch nicht beschränkt sein soll, näher erläutert. Die Fig. 1 zeigt auf schematische Weise in Draufsicht die erfindungswesentlichen Teile eines Aufzeichnungs- und/oder Wiedergabegerätes gemäss einem ersten Ausführungsbeispiel der Erfindung, das zwei Bandführungseinrichtungen aufweist, deren Trägerteile mit den zugehörigen Antriebsteilen je über zwei Paare von Kupplungsanschlägen lösbar gekuppelt und mittels einer schraubenförmigen Zugfeder verspannt sind, wobei die Bandführungseinrichtungen sich in ihrer Ruhelage befindend dargestellt sind. Die Fig. 2 zeigt das Gerät gemäss Fig. 1 in analoger Darstellungsweise, wobei die beiden Bandführungseinrichtungen sich in ihrer Betriebslage befindend dargestellt sind. Die Fig. 3 zeigt in einem Ausschnitt aus Fig. 1, jedoch in vergrössertem Masstab, eine der beiden Bandführungseinrichtungen in ihrer Ruhelage.

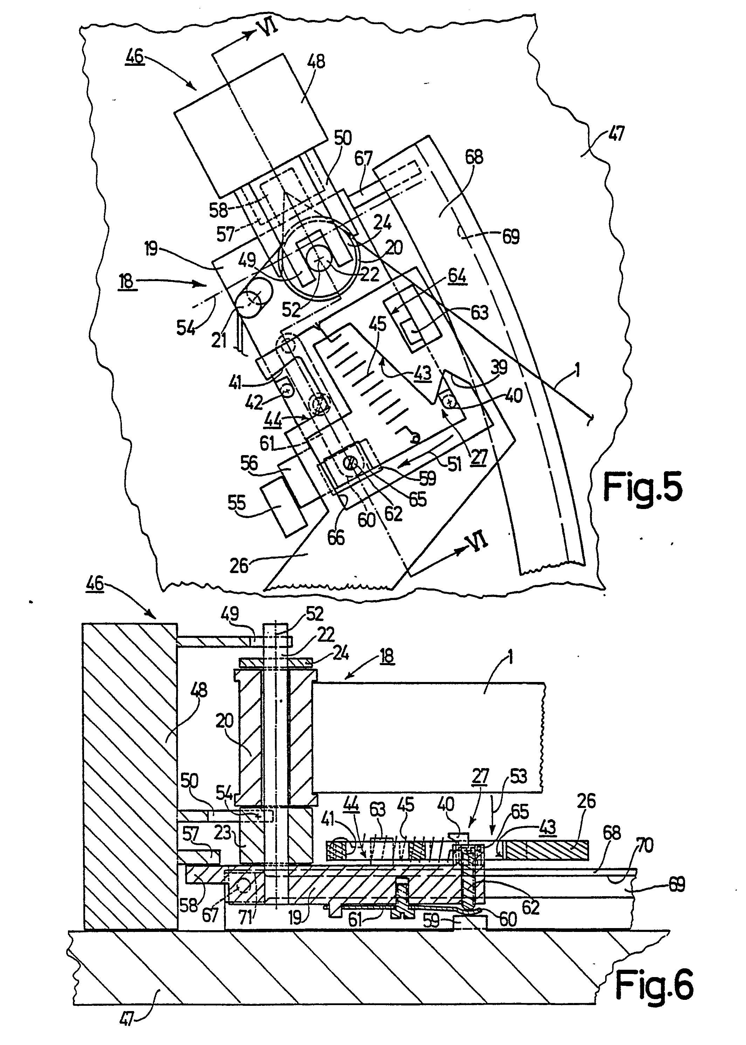

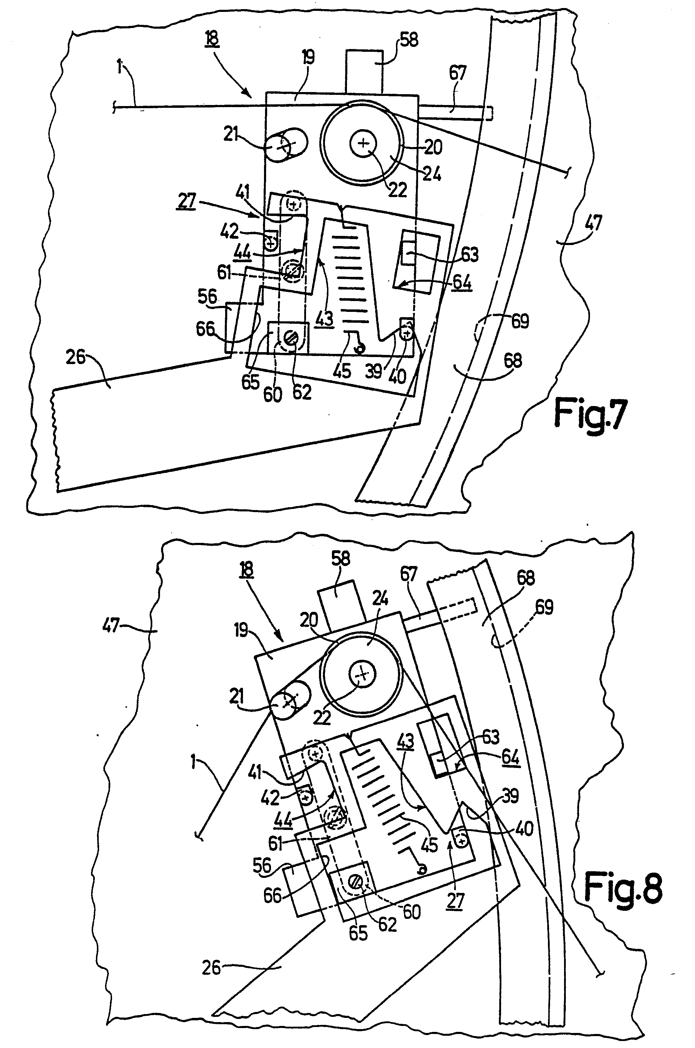

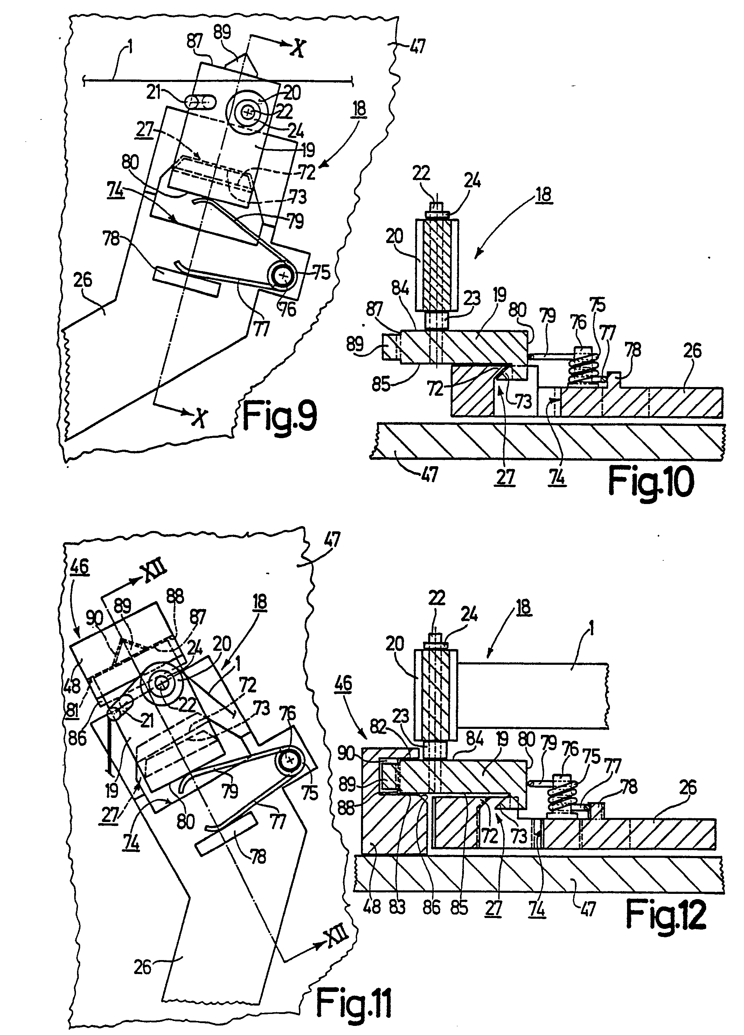

Die Fig. 4 zeigt die Bandführungseinrichtung gemäss Fig. 3 in einem Schnitt längs der Linie IV-IV in Fig. 3. Die Fig. 5 zeigt in einem Ausschnitt aus Fig. 2 aber in vergrössertem Masstab, die auch in den Fig. 3 und 4 dargestellte Bandführungseinrichtung, jedoch in ihrer Betriebslage. Die Fig. 6 zeigt die Bandführungseinrichtung gemäss den Fig. 3, 4 und 5 in einem Schnitt längs der Linie VI-VI in Fig. 5. Die Fig. 7 zeigt in analoger Darstellungsweise wie die Fig. 3 und 5 die Bandführungseinrichtung gemäss den Fig. 3 bis 6 in einer knapp neben der Ruhelage befindlichen Zwischenlage. Die Fig. 8 zeigt in analoger Darstellungsweise wie die Fig. 3, 5 und 7 die Bandführungseinrichtung gemäss den Fig. 3 bis 7 in einer knapp neben der Betriebslage befindlichen weiteren Zwischenlage. Die Fig. 9 zeigt in analoger Darstellungsweise wie die Fig. 3 eine sich in ihrer Ruhelage befindende Bandführungseinrichtung eines Aufzeichnungs- und/oder Wiedergabegerätes gemäss einem zweiten Ausführungsbeispiel der Erfindung, wobei der Trägerteil dieser Bandführungseinrichtung mit dem zugehörigen Antriebsteil über ein Paar von Kupplungsanschlägen lösbar gekuppelt und mittels einer Schenkelfeder verspannt ist. Die Fig. 10 zeigt die Bandführungseinrichtung gemäss Fig. 9 in einem Schnitt längs der Linie X-X in Fig. 9. Die Fig. 11 zeigt in analoger Darstellungsweise wie die Fig. 9 die Bandführungseinrichtung gemäss den Fig. 9 und 10, jedoch in ihrer Betriebslage. Die Fig. 12 zeigt die in ihrer Betriebslage befindliche Bandführungseinrichtung gemäss Fig. 11 in einem Schnitt längs der Linie XII-XII in Fig. 11.

In den Fig. 1 und 2 ist schematisch ein Aufzeichnungs- und/oder Wiedergabegerät dargestellt, das zum Aufzeichnen und/oder Wiedergeben von Signalen, insbesondere von Fernsehsignalen und den dazugehörigen Tonsignalen, auf einem magnetisierbaren bandförmigen Aufzeichnungsträger 1, der im folgenden einfach Band genannt ist, ausgebildet ist. Das Gerät weist eine Bandführungstrommel 2 auf, um deren Mantelfläche das Band 1 in einem Winkelbereich von im wesentlichen 180° in einer schraubenlinienförmigen Bahn schlingbar ist. Innerhalb der Bandführungstrommel 2 sind zwei schematisch dargestellte, rotierend antreibbare Magnetköpfe 3 und 4 vorgesehen, die durch einen in der Trommel 2 angebrachten Spalt hindurch, der die Trommel im wesentlichen in zwei Trommelhälften teilt, mit den um die Trommel geschlungenen Band 1 in Wirkverbindung treten und das Band bei dessen Fortbewegung entlang von schräg zu dessen Längsrichtung verlaufenden Spuren abtasten, wobei die Magnetköpfe Fernsehsignale auf dem Band aufzeichnen oder von demselben wiedergeben. Zum Fortbewegen des um die Bandführungstrommel 2 geschlungenen Bandes 1 weist das Gerät eine Antriebswelle 5 auf, an die das Band mit einer im Gerät auf nicht näher dargestellte Weise verstellbar angeordneten Andruckrolle 6 angedrückt werden kann.

Das Gerät weist ferner einen stillstehenden Magnetkopf 7 auf, mit dem auf dem Band 1 eine in dessen Längsrichtung verlaufende Spur abtastbar ist und ein zu den Fernsehsignalen gehöriges Tonsignal aufgezeichnet bzw. wiedergegeben werden kann. Neben dem Magnetkopf 7 ist ein weiterer stillstehender Magnetkopf 8 angeordnet, mit dem dieselbe Spur abtastbar ist, die auch der Magnetkopf 7 abtastet, und der zum Löschen von in dieser Spur aufgezeichneten Tonsignalen vorgesehen ist. Ein weiterer stillstehender Magnetkopf 9 ist dazu vorgesehen, sowohl die in den schrägen Spuren aufgezeichneten Fernsehsignale als auch das dazugehörige in der in Längsrichtung des Bandes verlaufenden Spur aufgezeichnete Tonsignal zugleich zu löschen.

Wie aus den Fig. 1 und 2 ersichtlich ist, ist das Band 1 in einer in das Gerät einsetzbaren, im wesentlichen quaderförmigen Kassette 10 untergebracht, deren Gehäuse zwei Hauptwände und vier Seitenwände aufweist und die zur Aufnahme des Bandes nebeneinander liegende, drehbar gelagerte, rotierend antreibbare Spulen 11 und 12 enthält, zwischen denen das Band 1 verläuft. Hierbei ist das Band 1 in seinem Verlauf in der Kassette von der als Vorratsspule dienenden ersten Spule 11 zu einer ersten Umlenkrolle 13, von dieser durch eine erste Öffnung 14 in der mit 15 bezeichneten, wannenförmig ausgebildeten Seitenwand, danach ausserhalb des Kassettengehäuses längs der Seitenwand 15 und hierauf durch eine zweite Öffnung 16 in der Seitenwand 15 zu einer zweiten Umlenkrolle 17 und von dieser zu der als Aufnahmespule dienenden zweiten Spule 12 geführt. Die Kassette 10 weist zum Schutz des ausserhalb des Kassettengehäuses entlang der Seitenwand 15 verlaufenden Abschnittes des Bandes 1 einen Kassettenverschluss auf, der beim Einsetzen der Kassette in das Gerät automatisch den ausserhalb des Kassettengehäuses verlaufenden Abschnitt des Bandes freigibt, der aber hier der Deutlichkeit und Einfachheit der Zeichnung halber nicht dargestellt ist, da er für die Erfindung nicht wesentlich ist.

Das Gerät weist zum Herausführen des Bandes 1 aus der Kassette 10 und zum Herumführen desselben um die Bandführungstrommel 2 sowie zum Zurückführen des Bandes in die Kassette zwei je zwischen einer Ruhelage und einer Betriebslage entlang einer vorgegebenen Bewegungsbahn verstellbare Bandführungseinrichtungen 18 und 18' auf, die vollkommen analog aufgebaut sind. Aus diesem Grunde sind im folgenden einander entsprechende Teile mit denselben Bezugszeichen bezeichnet, wovon lediglich ein zusätzlich mit einem Apostroph versehen ist. Jede Bandführungseinrichtung 18, 18', weist einen im wesentlichen blockförmigen Trägerteil 19, 19' auf, auf dem als Bandführungen eine drehbare Bandführungsrolle 20, 20' und ein neben dieser angeordneter, feststehender Bandführungsstift 21, 21' vorgesehen sind. Zur Lagerung der Bandführungsrolle 20, 20' am Trägerteil 19, 19' ist, wie aus den Fig. 4 und 6 deutlich ersichtlich ist, in den Trägerteil 19, 19' eine Welle 22, 22' eingepresst, auf die eine Distanzhülse 23, 23' unverdrehbar aufgesetzt ist. An die Distanzhülse 23, 23' schliesst sich die mit Flanschen versehene, um die Welle drehbare Bandführungsrolle 20, 20' an, die an der Welle mit einem auf dieselbe aufgepressten Sicherungsring 24, 24' gesichert ist. Der Bandführungsstift 21, 21' ist einfach analog zur Welle 22, 22' der Bandführungsrolle 20, 20' in den Trägerteil 19, 19' eingepresst. Selbstverständlich sind aber auch andere Befestigungsarten für die Bandführungsrolle und den Bandführungsstift möglich.

Wie erwähnt, sind die beiden Bandführungseinrichtungen 18, 18' je zwischen einer in Fig. 1 dargestellten Ruhelage und einer in Fig. 2 dargestellten Betriebslage verstellbar. Wenn die beiden Bandführungseinrichtungen 18, 18' sich in ihren in Fig. 1 dargestellten Ruhelagen befinden, dann hintergreifen die Bandführungen 20, 20' und 21, 21' das entlang der Seitenwand 15 des Kassettengehäuses innerhalb der Kassette verlaufende Band 1. Dabei ist es wichtig, dass die Bandführungseinrichtungen eine genau bestimmte räumliche Lage einnehmen, um stets ein sicheres und einwandfreies Hintergreifen des Bandes zu gewährleisten. Beim Verstellen der Bandführungseinrichtungen 18, 18' in ihre Betriebslagen nehmen die Bandführungen 20, 20' und 21, 21' das Band mit, wobei selbstverständlich zumindest eine der beiden Spulen 11 bzw. 12 zum Abspulen des Bandes zur Drehung freigegeben sein muss. Auch dabei ist eine genau bestimmte räumliche Lage der Bandführungseinrichtungen wichtig, um stets ein sicheres und einwandfreies Mitnehmen des Bandes zu gewährleisten. Bei in ihrer Betriebslage sich befindenden Bandführungseinrichtungen 18, 18' nimmt das Band 1 den in Fig. 2 dargestellten Verlauf ein. Das Band 1 verläuft hierbei von der Spule 11, über die Umlenkrolle 13, den Magnetkopf 9, die Bandführungsrolle 20' und den Bandführungsstift 21' der Bandführungseinrichtung 18', die Bandführungstrommel 2, den Bandführungsstift 21 und die Bandführungsrolle 20 der Bandführungseinrichtung 18, den Magnetkopf 8, den Magnetkopf 7, die Antriebswelle 5 und die Andruckrolle 6, einen weiteren geräteseitigen Bandführungsstift 25 und die Umlenkrolle 16 zur Spule 12. Wie erwähnt, halten die Bandführungen 20, 20' und 21, 21' bei sich in ihren Betriebslagen befindenden Bandführungseinrichtungen 18, 18' das Band 1 um die Bandführungstrommel 2 herumgeschlungen, so dass die Bandführungseinrichtungen 18, 18' den Verlauf des Bandes 1 um die Bandführungstrommel 2 festlegen. An dieser Stelle sei der Vollständigkeit halber erwähnt, dass die Bandführungstrommel 2 und die Bandführungsstifte 21, 21' gegenüber den anderen mit dem Band zusammenwirkenden Bauteilen geneigt angeordnet sind, um den vorerwähnten schraubenlinienförmigen Verlauf des Bandes 1 um die Bandführungstrommel 2 zu erzielen, was aber der Einfachheit halber in den Fig. 1 und 2 nicht dargestellt ist, sondern nur in den Fig. 3, 5, 7 und 8 betreffend den Bandführungsstift 21. Da der exakte und stets gleichbleibende sowie genau reproduzierbare Verlauf des Bandes um die Bandführungstrommel für einen einwandfreien Aufzeichnungs- bzw. Wiedergabevorgang sehr wesentlich ist, ist es wichtig, dass die diesen Verlauf bestimmenden Bandführungseinrichtungen in ihren Betriebslagen eine genaue räumliche Position einnehmen. Um das Band wieder in die Kassette 10 zurückzubringen, werden die Bandführungseinrichtungen 18, 18' von ihren Betriebslagen in ihre Ruhelage verstellt, wobei selbstverständlich wieder zumindest eine der beiden Spulen zum Aufwickeln des Bandes 1 angetrieben ist. Auch hierbei steht das Band 1 mit den Bandführungseinrichtungen in Wirkverbindung, weshalb es wichtig ist, dass die Bandführungseinrichtungen auch bei dieser Verstellung eine genau bestimmte Lage einnehmen, um ein einwandfreies und schonendes Zusammenwirken mit dem Band zu gewährleisten. Um alle diese hohen Anforderungen auf einfache, raumsparende und betriebssichere Weise zu erfüllen, weist das Gerät den nachfolgend beschriebenen Aufbau auf.

Zur Verstellung der Bandführungseinrichtungen 18, 18' zwischen ihren Ruhelagen und ihren Betriebslagen ist mit dem Trägerteil 19, 19' jeder Bandführungseinrichtung ein als schwenkbarer, plattenförmiger Hebel 26, 26' ausgebildeter Antriebsteil über eine lösbare Kupplung 27, 27' gekuppelt. Jeder Hebel 26, 26' ist auf einer im Gerät drehbar gelagerten Welle 28, 28' befestigt, um die er verschwenkbar ist. Zum Verschwenken der beiden Hebel 26, 26' ist an jeder Welle 28, 28' ein Schneckenradsegment 29, 29' angebracht, das mit je einer Schnecke 30, 30' in Eingriff steht, wobei die Schnecke 30 rechtssteigend und die Schnecke 30' linkssteigend ausgebildet ist und beide Schnecken 30, 30' gemeinsam auf einer Welle 31 angebracht sind. Die Welle 31 ist, wie schematisch mit einer strichpunktierten Linie 32 angedeutet ist, von einem Motor 33 her antreibbar. Durch Betätigen einer ersten Schalteinrichtung 34 ist der Motor 33 in einer solchen Polarität an seine Versorgungsspannung V anschliessbar, dass er die Welle 31 entgegen dem Uhrzeigersinn antreibt, wodurch aufgrund der Gegensinnigkeit der beiden Schneckengetriebe das Schneckenradsegment 29 und der damit drehfest verbundene Hebel 26 entgegen dem Uhrzeigersinn und das Schneckenradsegment 29' und der damit drehfest verbundene Hebel 26' im Uhrzeigersinn verschwenkt werden. Hierdurch sind die mit den Hebeln 26, 26' lösbar gekuppelten Bandführungseinrichtungen 18, 18' in Richtung von ihren Ruhelagen in ihre Betriebslagen verstellbar, um die Bandführungseinrichtungen in ihre Betriebslage zu bringen. Diese Schwenkbewegung der beiden Hebel 26, 26' wird dadurch beendet, dass ein am Hebel 26' angebrachter Ansatz 35 mit einem ersten Endlagenschalter 36 in Wirkverbindung tritt, der hierbei geöffnet wird und dabei den durch die Betätigung der ersten Schalteinrichtung 34 geschlossenen Stromkreis für den Motor 33 wieder unterbricht. Hierdurch bleibt der Motor 33 stillstehen, wobei die beiden Hebel 26, 26' über die beiden Schneckengetriebe aufgrund von deren Selbsthemmwirkung in ihren durch die Position des ersten Endlagenschalters 36 bestimmten Positionen festgehalten werden, wobei die Bandführungseinrichtungen 18, 18' ihre Betriebslagen einnehmen. Durch Betätigen einer zweiten Schalteinrichtung 37 ist der Motor 33 in der zur vorgenannten Polarität entgegengesetzten Polarität an seine Versorgungsspannung V anschliessbar, wobei er dann die Welle 31 im Uhrzeigersinn antreibt. Auf diese Weise sind über die beiden Schneckengetriebe der Hebel 26 im Uhrzeigersinn und der Hebel 26' entgegen dem Uhrzeigersinn verschwenkbar, was eine Verstellung der beiden Bandführungseinrichtungen 18, 18' in Richtung von ihren Betriebslagen in ihre Ruhelagen zur Folge hat. Diese Schwenkbewegung der beiden Hebel 26, 26' wird dadurch beendet, dass der am Hebel 26 angebrachte Ansatz 35 mit einem zweiten Endlagenschalter 38 in Wirkverbindung tritt, der hierbei geöffnet wird und dabei den durch die Betätigung der zweiten Schalteinrichtung 37 geschlossenen Stromkreis für den Motor 33 wieder unterbricht. Hierdurch bleibt der Motor 33 stillstehen, wobei die beiden Hebel 26, 26' über die beiden Schneckengetriebe aufgrund von deren Selbsthemmwirkung in ihren durch die Position des zweiten Endlagenschalters 38 bestimmten Positionen, in denen die Bandführungseinrichtungen 18, 18' ihre Ruhelagen einnehmen, festgehalten werden.

Die erwähnte lösbare Kupplung 27, 27' zwischen jedem der beiden plattenförmig ausgebildeten Hebel 26, 26' und dem betreffenden blockförmigen Trägerteil 19, 19' weist in vorliegendem Fall zwei quer zur Verstellungsrichtung der betreffenden Bandführungseinrichtung 18, 18' und zusätzlich in der Verstellungsrichtung mit Normalabstand zueinander liegenden Paare von Kupplungsanschlägen 39, 39', 40, 40' und 41, 41', 42, 42' auf, so dass die beiden Paare einen möglichst grossen Abstand voneinander haben. Die Kupplungsanschläge 39, 39' und 40, 40' sowie die Kupplungsanschläge 41, 41' und 42, 42' liegen paarweise einander gegenüber und sind in der Verstellungsrichtung der betreffenden Bandführungseinrichtung 18, 18' wirksam. Das eine Paar von Kupplungsanschlägen 39, 39' und 40, 40' weist als einen Kupplungsanschlag einen im plattenförmigen Hebel 26, 26' angebrachten V-förmigen Einschnitt 39, 39' und als anderen Kupplungsanschlag einen am Trägerteil 19, 19' angebrachten mit seiner Mantelfläche in den V-förmigen Einschnitt 39, 39' eingreifenden zylinderförmigen Stift 40, 40' auf. Das andere Paar von Kupplungsanschlägen 41, 41' und 42, 42' weist als einen Kupplungsanschlag eine am plattenförmigen Hebel 26, 26' angebrachte ebene Stützfläche 41, 41' und als anderen Kupplungsanschlag ebenfalls einen am Trägerteil 19, 19' angebrachten, mit seiner Mantelfläche an der ebenen Stützfläche 41, 41' angreifenden zylinderförmigen Stift 42, 42' auf. Es sind somit im vorliegenden Fall die beiden zylinderförmigen Stifte 40, 40' und 42, 42' gemeinsam an einem der beiden über die lösbare Kupplung 27, 27' zu kuppelnden Teile 19, 19' und 26, 26' und der V-förmige Einschnitt 39, 39' und die ebene Stützfläche 41, 41' am anderen der beiden zu kuppelnden Teile vorgesehen, was im Hinblick auf eine möglichst rationelle und einfache Montage bzw. Herstellung von Vorteil ist. Dabei ist der V-förmige Einschnitt 39, 39' durch zwei keilförmig zueinander verlaufende Begrenzungswände einer den plattenförmigen Hebel 26, 26' durchsetzenden ersten Ausnehmung 43, 43' und ist die ebene Stützfläche 41, 41' durch eine Begrenzungswand einer der plattenförmigen Hebel 26, 26' durchsetzenden zweiten Ausnehmung 44, 44' gebildet. Die beiden zylinderförmigen Stifte 40, 40' und 42, 42' sind dabei durch die beiden Ausnehmungen 43, 43' und 44, 44' hindurchgeführt und weisen je ein hakenförmig abgewinkeltes freies Ende auf, mit dem sie den plattenförmigen Hebel 26, 26' umgreifen, was aus den Fig. 4 und 6 deutlich zu ersehen ist. Auf diese Weise ist eine einfache Montage des Trägerteiles 19, 19' am betreffenden Hebel 26, 26' erreicht, wobei aufgrund der hakenförmigen Ausbildung der zylinderförmigen Stifte ein Lösen des Trägerteils vom betreffenden Hebel in Längsrichtung der zylinderförmigen Stifte ausgeschlossen ist.

Zwischen jedem als Antriebsteil vorgesehenen Hebel 26, 26' und dem mit diesem Hebel über die lösbare Kupplung 27, 27' gekuppelten Trägerteil 19, 19' ist nunmehr eine Feder 45, 45' wirksam, die den Hebel 26, 26' und den Trägerteil 19, 19' im wesentlichen in der Verstellungsrichtung jeder Bandführungseinrichtung 18, 18' gegeneinander verspannt. Als Feder 45, 45' ist eine auf Zug beanspruchte, im wesentlichen in der Verstellungsrichtung gespannte Schraubenfeder vorgesehen, die mit ihren beiden Enden einerseits am Hebel 26, 26' und andererseits am Trägerteil 19, 19' eingehängt ist, wobei sie im wesentlichen in der den Hebel 26, 26' durchsetzenden ersten Ausnehmung 43, 43' liegt. Eine solche Zugfeder nimmt vorteilhafterweise wenig Raum in Anspruch und ist sehr einfach montierbar. Die Feder 45, 45' bewirkt, dass die paarweise miteinander zusammenwirkende Kupplungsanschläge 39, 39', 40, 40' und 41, 41', 42, 42' der lösbaren Kupplung 27, 27' bei aus ihrer Betriebslage verstellter Bandführungseinrichtung 18, 18' stets kraftschlüssig aneinander anliegen, ohne dass zwischen den paarweise miteinander zusammenwirkenden Kupplungsanschlägen ein Spiel auftritt. Hierdurch ist auf besonders einfache und raumsparende Weise über die bei sich ausserhalb ihrer Betriebslage befindender Bandführungseinrichtung durch die Feder 45, 45' stets kraftschlüssig aneinander anliegenden Kupplungsanschläge dafür gesorgt, dass der Trägerteil 19, 19' am betreffenden Hebel 26, 26' ohne separate Hilfsmittel in einer vorgegebenen Lage genau und sicher festgehalten ist, wie dies insbesondere aus den Fig. 3 und 4 ersichtlich ist. Hierdurch ist gewährleistet, dass die Bandführungen 20, 20' 21, 21' bei sich in ihren Ruhelagen befindlichen Bandführungseinrichtungen 18, 18' das Band absolut sicher hintergreifen und beim Verstellen der Bandführungseinrichtungen von ihren Ruhelagen in ihre Betriebslagen dass Band mit Sicherheit einwandfrei und schonend mitnehmen. Dadurch, dass die zwei Paare von Kupplungsanschlägen in einem möglichst grossen Abstand voneinander liegen, erfolgt die Festlegung der Lage des Trägerteiles am betreffenden Hebel in besonders stabiler und exakter Weise.

Wie bereits erwähnt, sind die Bandführungseinrichtungen 18, 18' durch Betätigen der ersten Schalteinrichtung 34 vom Motor 33 über die gegensinnigen Schnecken 30, 30', die Schneckenradsegmente 29, 29' und die Hebel 26, 26' aus ihren in den Fig. 1, 3, und 4 dargestellten Ruhelagen in ihre in den Fig. 2, 5 und 6 dargestellten Betriebslagen verstellbar. Bei dieser Verstellung nehmen die Hebel 26, 26' die Trägerteile 19, 19' der Bandführungseinrichtungen 18, 18' mit, wobei im normalen Betrieb die paarweise miteinander zusammenwirkenden Kupplungsanschläge 39, 39', 40, 40' und 41, 41', 42, 42' unter der Wirkung der Feder 45, 45' stets kraftschlüssig aneinander anliegen, wodurch wie erwähnt die räumliche Lage der Trägerteile 19, 19' auch beim Verstellen der Bandführungseinrichtungen 18, 18' stets genau und sicher festgelegt ist und damit das Band 1 in einwandfreier und schonender Weise mitgenommen wird. Beim Erreichen der Betriebslagen der Bandführungseinrichtungen 18, 18' treten dieselben zu ihrer räumlichen Positionierung mit je einer Positionseinrichtung 46, 46' in Wirkverbindung. Sobald die Bandführungseinrichtungen 18, 18' an ihren Positioniereinrichtungen 46, 46' anstossen, ist eine weitere Verstellung der Bandführungseinrichtungen nicht mehr möglich. Es werden aber die Hebel 26, 26' vom Motor 33 her noch so lange weiter angetrieben, bis der am Hebel 26' vorgesehene Ansatz 35 an dem ersten Endlagenschalter 36 anstösst und dabei denselben öffnet. Erst dann bleibt wie erwähnt, der Motor 33 stillstehen und werden die Hebel 26, 26' in ihren durch den ersten Endlagenschalter 36 bestimmten Positionen durch die Selbsthemmwirkung der Schneckengetriebe festgehalten. Mit anderen Worten bedeutet dies, dass bei in ihren Betriebslagen positionierten Bandführungseinrichtungen 18, 18' die Hebel 26, 26' gegenüber den Trägerteilen 19, 19' der Bandführungseinrichtungen mit Überhub verstellt sind, wie dies auch die Fig. 2, 5 und 6 zeigen.

Durch die Verstellung der als Antriebsteile vorgesehenen Hebel 26, 26' gegenüber den Trägerteilen 19, 19' mit Überhub werden die lösbaren Kupplungen 27, 27' gelöst, wobei die paarweise miteinander zusammenwirkenden, in der Verstellungsrichtung wirksamen Kupplungsanschläge 39, 39', 40, 40' und 41, 41', 42, 42' der lösbaren Kupplungen 27, 27' voneinander abheben und zugleich die zwischen den Hebeln 26, 26' und den Trägerteilen 19, 19' wirksamen Federn 45, 45' weiter gespannt werden. Nach dem Lösen der Kupplungen 27, 27' stehen die Trägerteile 19, 19' der Bandführungseinrichtungen 18, 18' nur mehr über die Federn 45, 45' mit den betreffenden Hebeln 26, 26' in Verbindung, wodurch vorteilhafterweise erreicht ist, dass die Hebel auf die räumliche Lage und Positionierung der Bandführungseinrichtungen keinen störenden Einfluss ausüben. Wie aber auch aus den Fig. 2, 5 und 6 zu ersehen ist, sind die Federn 45, 45' in vorliegendem Fall zusätzlich dazu ausgenützt, die in ihren Betriebslagen befindlichen Bandführungseinrichtungen 18, 18' kraftschlüssig an die Positioniereinrichtungen 46, 46' angelegt zu halten; es erfolgt also eine Mehrfachausnützung der Federn 45, 45'.

Im folgenden wird die räumliche Positionierung der Bandführungseinrichtungen 18, 18' in ihren Betriebslagen mit Hilfe der Positioniereinrichtungen 46, 46' anhand der Fig. 5 und 6 im Detail beschrieben. Die Positioniereinrichtungen 46, 46' weisen je einen an einer Grundplatte 47 des Gerätes angebrachten Positionierblock 48, 48' auf. Jeder Positionierblock 48, 48' trägt einen U-förmig ausgebildeten Positionieranschlag 49, 49', der beim Verstellen der Bandführungseinrichtung 18, 18' in ihre Betriebslage knapp vor Erreichen derselben mit dem vom Trägerteil 19, 19' abgewandten freien Ende der Welle 22, 22' der Bandführungsrolle 20, 20' in Wirkverbindung tritt. Der U-förmige Positionieranschlag 49, 49' umschliesst dabei mit seinen beiden Schenkeln die Welle 22, 22', was den ersten Schritt zur räumlichen Positionierung der Bandführungseinrichtung 18, 18' darstellt. Zu erwähnen ist, dass der Stegbereich des U-förmigen Positionieranschlages 49, 49' mit der Welle 22, 22' nicht in Kontakt tritt; übrigens auch nicht während des gesamten weiteren Positioniervorganges der Bandführungseinrichtung. Jeder Positionierblock 48, 48' trägt ferner einen V-förmig ausgebildeten weiteren Positionieranschlag 50, 50', der beim weiteren Verstellen der Bandführungseinrichtung 18, 18' in Richtung zu ihrer Betriebslage mit der auf die Welle 22, 22' der Bandführungsrolle 20, 20' aufgesetzten zylinderförmigen Distanzhülse 23, 23' in Wirkverbindung tritt. Dabei stösst die Distanzhülse 23, 23' gegen die beiden keilförmig zueinander verlaufenden Positionierflächen des in der Verstellungsrichtung der Bandführungseinrichtung wirksamen V-förmigen Positionieranschlages 50, 50', was den zweiten Schritt zur räumlichen Positionierung der Bandführungseinrichtung 18, 18' darstellt. Nach diesem zweiten Schritt zur räumlichen Positionierung der Bandführungseinrichtung 18, 18' ist die Neigungslage der Bandführungseinrichtung in einer senkrecht zur Verstellrichtung verlaufenden Ebene festgelegt. Bis zu dem Zeitpunkt, zu dem die Distanzhülse 23, 23' sich an den V-förmigen Positionieranschlag 50, 50' anlegt, ist der Trägerteil 19, 19' über die Kupplung 27, 27' mit dem Hebel 26, 26' gekuppelt, wobei die paarweise miteinander zusammenwirkenden Kupplungsanschläge 39, 39', 40, 40' und 41, 41', 42, 42' unter der Wirkung der Feder 45, 45' kraftschlüssig aneinander anliegen. Hierdurch ist zu diesem Zeitpunkt die Lage jeder Bandführungseinrichtung 18, 18' ausser von den beiden bereits zur Wirkung gebrachten Positionieranschlägen 49, 49' und 50, 50' der Positioniereinrichtung 46, 46' auch noch von dem betreffenden Hebel 26, 26' mitbestimmt.

Wie bereits erläutert, werden die Hebel 26, 26' gegenüber den Trägerteilen 19, 19' mit Überhub verstellt, wobei dann die lösbaren Kupplungen 27, 27' gelöst werden und die paarweise miteinander zusammenwirkenden Kupplungsanschläge derselben entgegen der Kraft der Federn 45, 45' voneinander abgehoben werden. Damit ist aber die räumliche Position der Bandführungseinrichtungen 18, 18' dann nicht mehr von den Hebeln 26, 26' mitbestimmt, weshalb die räumliche Positionierung im weiteren von den Positionereinrichtungen 46, 46' übernommen wird, und zwar auf folgende Art und Weise.

Nach dem Lösen der Kupplungen 27, 27' sind die Trägerteile 19, 19' von den Hebeln 26, 26' unbehindert und unbeeinflusst bewegbar, wobei von den an den Hebeln 26, 26' eingehängten Federn 45, 45' auf die Tragerteile 19, 19' eine Kraft ausgeübt wird, so dass die Distanzhülsen 23, 23' an den Bandführungseinrichtungen 18, 18' kraftschlüssig an die V-förmigen Positionieranschläge 50, 50' angelegt gehalten sind. Jeder der V-förmigen Positioneranschläge 50, 50' bildet dabei ein Auflager für die über die Distanzhülse 23, 23' an diesem Auflager kraftschlüssig anliegenden Bandführungseinrichtung. Jede Bandführungseinrichtung 18, 18' ist dabei im vorliegenden Fall in zwei im wesentlichen quer zur Verstellungsrichtung verlaufenden Schwenkrichtungen um das durch den V-förmigen Positionieranschlag 50, 50' gebildete Auflager verschwenkbar. Eine Schwenkbewegung in der quer zur Verstellungsrichtung verlaufenden Schwenkrichtung 51, 51' erfolgt durch Verschwenken der Bandführungseinrichtung 18, 18' um eine Schwenkachse 52, 52', die mit der Achse der Welle 22, 22' der Bandführungsrolle 20, 20' übereinstimmt. Eine weitere Schwenkbewegung in der quer zur Verstellungsrichtung verlaufenden Schwenkrichtung 53, 53' erfolgt durch Verschwenken der Bandführungseinrichtung 18, 18' um eine Schwenkachse 54, 54', die in einer senkrecht zur Verstellungsrichtung verlaufenden Ebene senkrecht zur Achse der Welle 22, 22' verläuft. Beide Schwenkbewegungen jeder Bandführungseinrichtung 18, 18' um das durch den V-förmigen Positioneranschlag 50, 50' gebildete Auflager erfolgen aufgrund der von der Feder 45, 45' auf den Trägerteil 19, 19' der Bandführungseinrichtung ausgeübten Kraft, so dass die beiden Federn 45, 45' zusätzlich auch diese Funktion erfüllen.

Zur Positionierung jeder um das durch den V-förmigen Positionieranschlag 50, 50' jeder Positioniereinrichtung 46, 46' gebildete Auflager in der Schwenkrichtung 51, 51' verschwenkten Bandführungseinrichtung 18, 18' weisen nun die Positioniereinrichtung 46, 46' und die Bandführungseinrichtung 18, 18' zwei mit Abstand zueinander liegende Paare von in der Schwenkrichtung 51, 51' der Bandführungseinrichtung 18, 18' um das Auflager wirksamen, miteinander zusammenwirkenden Positionieranschlägen auf. Das eine Paar von diesen Positionieranschlägen ist dabei durch den V-förmigen Positionieranschlag 50, 50' und die Distanzhülse 23, 23' gebildet, die beide somit eine Doppelfunktion erfüllen. Das andere Paar von diesen Positioneranschlägen ist durch einen an der Grundplatte 47 vorgesehenen Ansatz 55, 55' der Positionereinrichtung 46, 46' und durch einen vom Trägerteil 19, 19' der Bandführungseinrichtung 18, 18' abstehenden Vorsprung 56, 56' gebildet. Zur Positionierung jeder um das erwähnte Auflager in der Schwenkrichtung 53, 53' verschwenkten Bandführungseinrichtung 18, 18' weisen die Positioniereinrichtung und die Bandführungseinrichtung ebenfalls zwei mit Abstand zueinander liegende Paare von in der Schwenkrichtung 53, 53' der Bandführungseinrichtung 18, 18' um das Auflager wirksamen, miteinander zusammenwirkenden Positionieranschlägen auf. Das eine Paar von Positionieranschlägen weist einerseits einen vom Positionierblock 48, 48' abstehenden Positionierlappen 57, 57' und andererseits einen vom Trägerteil 19, 19' abstehenden Positionierlappen 58, 58' auf. Das andere Paar von diesen Positioneranschlägen weist einen an der Grundplatte 47 vorgesehenen Ansatz 59, 59' der Positionereinrichtung 46, 46' auf. Der mit diesem Ansatz 59, 59' zusammenwirkende Positionieranschlag an der Bandführungseinrichtung 18, 18' ist durch das gewölbt ausgebildete Ende 60, 60' einer am Trägerteil 19, 19' genau positionierten und befestigten Blattfeder 61, 61' gebildet. Am gewölbt ausgebildeten Ende 60, 60' der Blattfeder 61, 61' greift dabei vom Trägerteil 19, 19' her eine in demselben verdrehbare Justierschraube 62, 62' an, mit der die Lage des als Positioneranschlages dienenden gewölbten Endes 60, 60' der Blattfeder 61, 61' gegenüber dem Trägerteil 19, 19' justierbar ist.

Wie erwähnt, wird jede Bandführungseinrichtung 18, 18' unter der Wirkung der Feder 45, 45' um die beiden Schwenkachsen 52, 52' und 54, 54' in den beiden Schwenkrichtungen 51, 51' und 53, 53' verschwenkt, nachdem die Bandführungseinrichtung mit der an ihr angebrachten Distanzhülse 23, 23' gegen den in Verstellrichtung wirksamen, ein Auflager für die Bandführungseinrichtung bildenden V-förmigen Positionieranschlag 50, 50' angestossen ist. Bei diesem Verschwenken der Bandführungseinrichtungen 18, 18' stossen die in den Schwenkrichtungen 51, 51' und 53, 53' wirksamen, paarweise zusammenwirkenden Positioneranschläge mit ihren Berührungsflächen praktisch senkrecht aufeinander, was den dritten und letzten Schritt zur räumlichen Positionierung der Bandführungseinrichtung darstellt. Dadurch, dass die Positionieranschläge beim Positionieren praktisch senkrecht aufeinander stossen, tritt zwischen denselben keine Gleitbewegung auf, so dass die Reibungsverhältnisse zwischen den Positionieranschlägen keinen nachteiligen Einfluss auf die Genauigkeit und Reproduzierbarkeit der Positionierung ausüben. Ausserdem ist dadurch der Verschleiss der Positionieranschläge minimal. Durch das paarweise Zusammenstossen der Positionieranschläge 50, 50', 23, 23' und 55, 55', 56, 56' ist die Neigungslage der Bandführungseinrichtung 18, 18' in einer in Verstellungsrichtung und senkrecht zur Achse 52, 52' der Bandführungsrolle 20, 20' verlaufenden Ebene festgelegt. Durch das paarweise Zusammenstossen der Positionieranschläge 57, 57', 58, 58' und 59, 59', 60, 69' ist die Neigungslage der Bandführungseinrichtungen 18, 18' in einer in Verstellungsrichtung und durch die Achse 52, 52' der Bandführungsrolle 20, 20' verlaufenden Ebene festgelegt. Durch die Festlegung der letztgenannten Neigungslage ist selbstverständlich auch die Relativlage der Bandführungseinrichtung und insbesondere der darauf angebrachten Bandführungen 20, 20', 21, 21' derselben gegenüber dem Band 1 in axialer Richtung der Bandführungsrolle 20, 20' festgelegt, was für die sogenannte Höhenführung des Bandes 1 wesentlich ist. Nach dem Zusammenstossen der paarweise zusammenwirkenden Positionieranschläge werden dieselben durch die Kraft der Federn 45, 45' kraftschlüssig aneinander gehalten, und dies solange, als die Bandführungseinrichtungen 18, 18' sich in ihren nunmehr endgültig eingenommenen Betriebslagen befinden, was eine weitere Funktion der Federn 45, 45' darstellt.

Durch die vorstehend erläuterte, in drei Schritten erfolgende räumliche Positionierung der Bandführungseinrichtungen 18, 18' ist deren räumliche Position in ihren nunmehr endgültig eingenommenen Betriebslagen exakt und sicher und stets reproduzierbar festgelegt. Dies ist für eine gute Führung des Bandes 1 mit Hilfe der Bandführungen 20, 20', 21, 21' der Bandführungseinrichtungen 18, 18' insbesondere um die Bandführungstrommel 2 von grosser Wichtigkeit, da eine stets gleich genaue und stets reproduzierbare Führung des Bandes für ein einwandfreies Aufzeichnen und Wiedergeben Voraussetzung ist. Bei dieser räumlichen Positionierung werden dabei die zwischen den Hebeln und den Trägerteilen wirksamen Federn, die bei ausserhalb ihrer Betriebslage sich befindenden Bandführungseinrichtungen die Kupplungsanschläge der lösbaren Kupplungen aneinander angelegt halten und hierbei zur Festlegung der Lage der Trägerteile die Hebel und die Trägerteile gegeneinander verspannen, vorteilhafterweise zusätzlich zum Verschwenken der Bandführungseinrichtungen um die durch die V-förmigen Positioniereinschnitte gebildeten Auflager und zum kraftschlüssigen Anlegen der Bandführungseinrichtungen an die Positioniereinrichtungen, wobei sich die betreffenden Positionieranschläge paarweise aneinander abstützen, ausgenützt. Hierdurch erübrigt sich das Vorsehen von separaten Mitteln zum kraftschlüssigen Anlegen der Bandführungseinrichtungen an die Positioniereinrichtungen, was einen erheblichen Raumgewinn und eine Vereinfachung darstellt.

Bei der Verstellung der Bandführungseinrichtungen 18, 18' von ihren Ruhelagen in ihre Betriebslagen kann vorkommen, dass das von den Bandführungen 20, 20', 21, 21' mitgenommene Band 1 auf die Bandführungseinrichtungen 18, 18' eine solche Kraft ausübt, dass es entgegen der Kraft der Federn 45, 45' zu einer Relativbewegung der Trägerteile 19, 19' der Bandführungseinrichtungen gegenüber den als Antriebsteile vorgesehenen Hebeln 26, 26' bei zumindest teilweiser Lösung der Kupplungen 27, 27' kommt. Dies kann beispielsweise dadurch entstehen, dass das Band 1 beim Abwickeln von einer der beiden in der Kassette 10 untergebrachten Spulen kurzzeitig am Bandwickel dieser Spule haften bleibt, wodurch es zu einer kurzen ruckartigen Relativbewegung zwischen den Trägerteilen und den Hebeln kommt. Auch kann es durch eine Betriebsstörung im Gerät zu einer vollkommenen Blockierung der Mitnahme des Bandes 1 kommen, wobei dann die Trägerteile 19, 19' während der gesamten Dauer dieser Blockierung entgegen der Wirkung der Federn 45, 45' gegenüber den Hebeln 26, 26' verstellt gehalten sind.

Zur Begrenzung einer solchen Relativbewegung der Trägerteile 19, 19' der Bandführungseinrichtungen 18, 18' gegenüber den als Antriebsteilen für die Bandführungseinrichtungen vorgesehenen Hebeln 26, 26' bei zumindest teilweiser Lösung der Kupplungen 27, 27' entgegen der Kraft der Federn 45, 45' bei aus ihren Betriebslagen verstellten Bandführungseinrichtungen 18, 18' sind im vorliegenden Fall drei Paare von miteinander zusammenwirkenden Begrenzungsanschlägen vorgesehen, wobei von den paarweise miteinander zusammenwirkenden Begrenzungsanschlägen jeweils der eine Begrenzungsanschlag am Trägerteil 19, 19' vorgesehen ist. Dies ist im folgenden anhand der Fig. 7 und 8 im Detail beschrieben.

In Fig. 7 ist eine Situation dargestellt, in der die Bandführungseinrichtungen 18, 18' während der Verstellung derselben von ihren Ruhelagen in ihre Betriebslagen knapp neben den Ruhelagen befindliche Zwischenlagen einnehmen, in welchen nur die Bandführungsrollen 20, 20' das Band 1 berühren und mitnehmen. Dabei ist angenommen, dass das Band 1 beispielsweise kurzzeitig in seiner Mitnahme blockiert ist und dadurch über die Bandführungsrollen 20, 20' kurzzeitig eine Kraft auf die Bandführungseinrichtungen 18, 18' ausübt. Diese Kraft hat in diesem Fall zur Folge, dass ein Paar der paarweise miteinander zusammenwirkenden Kupplungsanschläge, nämlich die Kupplungsanschläge 41, 41', 42, 42' entgegen der Kraft der Federn 45, 45' voneinander abheben, wobei aber das andere Paar von Kupplungsanschlägen, nämlich der V-förmige Einschnitt 39, 39' und der in denselben eingreifende zylinderförmige Stift 40, 40' von den Federn 45, 45' in Anlage aneinander gehalten sind. Es führt somit in diesem Fall jeder Trägerteil 19, 19' als Relativbewegung gegenüber dem betreffenden Hebel 26, 26' eine Schwenkbewegung um den zylinderförmigen Stift 40, 40' des durch den V-förmigen Einschnitt 39, 39' und den vorerwähnten Stift 40, 40' gebildeten Paares von Kupplungsanschlägen durch. Zur Begrenzung dieser Schwenkbewegung ist nun ein erstes Paar von Begrenzungsanschlägen 63, 63', 64, 64' vorgesehen. Der eine am Trägerteil 19, 19' vorgesehene Begrenzungsanschlag dieses ersten Paares ist hierbei durch einen von demselben abstehenden Fortsatz 63, 63' gebildet. Der andere Begrenzungsanschlag dieses ersten Paares ist an dem als Antriebsteil wirksamen Hebel 26, 26' vorgesehen und durch eine den Hebel 26, 26' durchsetzende dritte Ausnehmung 64 gebildet, in die der Fortsatz 63, 63' hineinragt. Zur Begrenzung einer solchen Schwenkbewegung des Trägerteiles 19, 19' gegenüber dem Hebel 26, 26' legt sich in einfacher Weise der Fortsatz 63, 63' an eine Begrenzungswand der dritten Ausnehmung 64 an, wie dies in Fig. 7 dargestellt ist. Wenn das Band 1 auf die Bandführungsrollen 20, 20' keine Kraft mehr ausübt, dann bringen die Federn 45, 45' die Trägerteile 19, 19' wieder in ihre normale Lage zurück, wobei dann auch die Kupplungsanschläge 41, 41', 42, 42' wieder aneinander anliegen und der Begrenzungsanschlag 63, 63' vom Begrenzungsanschlag 64, 64' abgehoben ist.

In Fig. 8 ist eine Situation dargestellt, in der die Bandführungseinrichtungen 18, 18' während der Verstellung derselben von ihren Ruhelagen in ihre Betriebslagen knapp vor den Betriebslagen befindliche Zwischenlagen einnehmen, in welchen sowohl die Bandführungsrollen 20, 20' als auch die Bandführungsstifte 21, 21' das Band 1 mitnehmen. Dabei ist angenommen, dass das Band 1 aufgrund einer Störung bei der Mitnahme desselben eine solche Kraft auf die Bandführungseinrichtung 18, 18' ausübt, dass die Trägerteile 19, 19' derselben gegenüber den Hebeln 26, 26' eine parallel zu der Plattenebene der Hebel verlaufende Verschiebebewegung als Relativbewegung ausführen, wobei beide Paare von Kupplungsanschlägen 39, 39', 40, 40' und 41, 41', 42, 42' entgegen der Wirkung der Federn 45, 45' bei gänzlicher Lösung der Kupplungen 27, 27' voneinander abgehoben werden, wie dies in Fig. 8 dargestellt ist. Die Begrenzung dieser Verschiebebewegung erfolgt mit Hilfe von zwei Paaren von Begrenzungsanschlägen. Und zwar kommt hierbei als eines dieser zwei Paare von Begrenzungsanschlägen auch das zur Begrenzung einer anhand von Fig. 7 beschriebenen Schwenkbewegung ausgenützte erste Paar von Begrenzungsanschlägen 63, 63', 64, 64' zum Einsatz. Das zweite Paar von hierbei wirksamen Begrenzungsanschlägen weist als einen Begrenzungsanschlag einen am Trägerteil 19, 19' vorgesehenen, von demselben abstehenden weiteren Fortsatz 65, 65' auf. Der andere Begrenzungsanschlag dieses zweiten Paares ist am Hebel 26, 26' vorgesehen und durch die Hebel 26, 26' durchsetzende erste Ausnehmung 43, 43' gebildet, in die der weitere Fortsatz 65, 65' hineinragt. Zur Begrenzung einer solchen Verschiebebewegung eines Trägerteiles 19, 19' gegenüber dem betreffenden Hebel 26, 26' legt sich in einfacher Weise der Fortsatz 63, 63' in einem Eckbereich und die betreffenden Begrenzungswände der dritten Ausnehmung 64, 64' und der weitere Fortsatz 65, 65' an die mit 66, 66' bezeichnete Begrenzungswand der ersten Ausnehmung 43, 43' an, wie dies in Fig. 8 dargestellt ist. Wenn das Band 1 auf die Bandführungen 20, 20', 21, 21' keine Kraft mehr ausübt, dann bringen die Federn 45, 45' die Trägerteile 19, 19' wieder in ihre normale Lage zurück, wobei dann wieder alle Kupplungsanschläge aneinander anliegen und die Begrenzungsanschläge 63, 63', 64, 64' und 65, 65', 66, 66' voneinander abgehoben sind.

Bei der Verstellung jeder Bandführungseinrichtung 18, 18' von ihrer Ruhelage in die Betriebslage kann noch eine weitere Relativbewegung zwischen dem Trägerteil 19, 19' und dem betreffenden Hebel 26, 26' aufgrund von störenden Einwirkungen des Bandes 1 auf die Bandführungen 20, 20', 21, 21' auftreten, welche Relativbewegung aber nicht mehr im einzelnen in den Figuren zeichnerisch dargestellt ist. Es kann nämlich auch der Fall eintreten, dass das Band 1 aufgrund von Störungen bei seiner Mitnahme auf jede Bandführungseinrichtung 18, 18' eine solche Kraft ausübt, dass der Trägerteil 19, 19' gegenüber dem betreffenden Hebel 26, 26' eine Kippbewegung um eine durch die beiden Paare von Kupplungsanschlägen hindurchgehende, im wesentlichen parallel zur Plattenebene jedes Hebels 26, 26' verlaufende, in den Figuren nicht dargestellte Kippachse ausführen, wobei aufgrund dieser Kippbewegung die zylinderförmigen Stifte 40, 40', 42, 42' auch nicht mehr längs ihrer gesamten Mantelfläche am V-förmigen Einschnitt 39, 39' und an der ebenen Stützfläche 41, 41' anliegen, sondern entgegen der Kraft der Feder 45, 45' bei teilweiser Lösung der Kupplung 27, 27' praktisch nurmehr in punktförmigem Kontakt mit dem Einschnitt 39, 39' und der Stützfläche 41, 41' stehen. Durch eine solche Kippbewegung werden die am Trägerteil 19, 19' angebrachten Bandführungen 20, 20', 21, 21' in einer von der Grundplatte 47 wegweisenden Richtung verstellt. Zur Begrenzung dieser Kippbewegung ist ein drittes Paar von Begrenzungsanschlägen vorgesehen. Von diesem dritten Paar ist der eine Begrenzungsanschlag wieder am Trägerteil 19, 19' vorgesehen und durch einen von demselben abstehenden Begrenzungsstift 67, 67' gebildet. Der andere Begrenzungsanschlag dieses dritten Paares ist geräteseitig ortsfest im Bereich der Bewegungsbahn jeder Bandführungseinrichtung 18, 18', in einer durchgehend sich entlang der Bewegungsbahn der Bandführungseinrichtung erstreckenden Schiene 68, 68' vorgesehen. Die Schiene 68, 68' weist hierbei eine ebenfalls durchgehend entlang der Bewegungsbahn der Bandführungseinrichtung sich erstreckenden Nut 69, 69' auf, deren dem hebel 26, 26' zugewandte Seitenfläche 70, 70' den anderen Begrenzungsanschlag des dritten Paares von Begrenzungsanschlägen bildet. Der Begrenzungsstift 67, 67' ragt mit seinem freien Ende in die Nut 69, 69' hinein, um mit der als Anschlagfläche für den Begrenzungsstift wirksamen Seitenfläche 70, 70' der Nut 69, 69' zusammenzuwirken. Zu erwähnen ist noch, dass die Nut 69, 69' an ihrem im Bereich der Betriebslage der Bandführungseinrichtung befindlichen Ende einen erweiterten Abschnitt 71, 71' aufweist, in den der Begrenzungsstift 67, 67' bei sich in ihrer Betriebslage befindender Bandführungseinrichtung ragt. Hierdurch ist gewährleistet, dass die Nut 69, 69' beim Positionieren der Bandführungseinrichtung 18, 18' mit Hilfe der Positioniereinrichtung 46, 46' auf keinen Fall mit dem Begrenzungsstift 67, 67' in Wirkverbindung kommt, wodurch einer Behinderung einer einwandfreien und ungestörten räumlichen Positionierung der Bandführungseinrichtung in ihrer Betriebslage vorgebeugt ist. Zur Begrenzung einer solchen Kippbewegung eines Trägerteiles 19, 19' gegenüber dem betreffenden Hebel 26, 26' legt sich in einfacher Weise der Begrenzungsstift 67, 67' an die dem Hebel 26, 26' zugewandte, als Anschlagfläche vorgesehene Seitenfläche 70, 70' der Nut 69, 69' an. Nach dem Ausbleiben der störenden Kraft des Bandes auf die Bandführungen kehrt jeder Trägerteil unter der Wirkung der Feder 45, 45' wieder in seine normale Lage zurück, wobei dann die Kupplungsanschläge wieder satt aneinander anliegen und der Begrenzungsstift 67, 67' von der Seitenfläche 70, 70' der Nut 69, 69' wieder abgehoben ist.

Durch das Vorsehen der drei Paare von Begrenzungsanschlägen sind sämtliche auf Störungen bei der Mitnahme des Bandes zurückzuführende Relativbewegungen zwischen den Trägerteilen 19, 19' und den Hebeln 26, 26' auf zulässige Bewegungsbereiche begrenzt. Hierdurch ist einer zu grossen Verstellung der Trägerteile gegenüber den Hebeln vorgebeugt, wodurch auch dann stets eine einwandfreie Mitnahme des Bandes gewährleistet ist, wenn beispielsweise eine kurzzeitige Störung in der Mitnahme des Bandes auftritt. Auch ist durch diese Bewegungsbegrenzung vermieden, dass sich die Trägerteile von den Hebeln zur Gänze lösen, wenn beispielsweise eine vollkommene Blockierung der Mitnahme des Bandes auftritt. Durch die gewählte Ausbildung der Begrenzungsanschläge ist dabei erreicht, dass eine Bewegungsbegrenzung unabhängig von der momentanen Lage der Bandführungseinrichtung stets gewährleistet ist. Dabei können von der an der Schiene vorgesehenen, als Begrenzungsanschlag wirksamen Anschlagfläche auch relativ grosse Kräfte aufgenommen werden.

Wie aus vorstehender Beschreibung ersichtlich ist, weist das anhand der Fig. 1 bis 8 beschriebene erfindungsgemässe Aufzeichnungs- und/oder Wiedergabegerät eine Reihe von vorstehend angeführten Vorteilen auf. Es ist aber nochmals besonders auf das Vorsehen der die Trägerteile und die Hebel gegeneinander verspannenden Federn hinzuweisen, da durch dieselben sowohl eine genaue Festlegung der Lage der Bandführungseinrichtung ausserhalb ihrer Betriebslagen als auch eine exakte räumliche Positionierung derselben in ihren Betriebslagen auf besonders einfache Weise und ohne separate Hilfsmittel erreicht ist. Hierdurch ist in diesem Zusammenhang insgesamt gesehen, eine einfache, raumsparende und betriebssichere Ausbildung geschaffen.

Das Gerät gemäss dem zweiten Ausführungsbeispiel der Erfindung weist ebenso wie das vorstehend beschriebene Gerät zwei analog aufgebaute Bandführungseinrichtungen auf. In den Fig. 9 bis 12 ist aber der Einfachheit halber nur die Bandführungseinrichtung 18 dargestellt, weshalb die weitere Beschreibung nur anhand dieser Bandführungseinrichtung erfolgt. Die Bandführungseinrichtung 18 weist einen blockförmigen Trägerteil 19 für eine Bandführungsrolle 20 und einen gegenüber derselben geneigt verlaufenden Bandführungsstift 21 auf. Zur Kupplung des Trägerteiles 19 mit dem als Antriebsteil vorgesehenen Hebel 26 ist eine lösbare Kupplung 27 vorgesehen, die in diesem Fall besonders einfach ausgebildet ist und nur ein Paar von miteinander zusammenwirkenden, einander gegenüberliegenden, in der Verstellungsrichtung der Bandführungseinrichtung 18 wirksamen Kupplungsanschlägen 72 und 73 aufweist. Die beiden Kupplungsanschläge sind hierbei durch je einen keilförmigen Ansatz gebildet, wobei der Ansatz 72 am Hebel 26 und der Ansatz 73 am Trägerteil 19 angeformt ist. Zum Aufsetzen des Trägerteiles 19 auf den Hebel 26 wird der mit dem keilförmigen Ansatz 73 versehene Abschnitt des Trägerteiles 19 in eine den Hebel 26 durchsetzende Ausnehmung 74 eingesetzt, wonach der Trägerteil 19 mit seinem Ansatz 73 parallel zur Plattenebene des Hebels 26 in Richtung zum Ansatz 72 am Hebel 26 verschoben wird. Dabei hintergreifen sich dann die beiden Ansätze 72 und 73 im eingekuppelten Zustand der Kupplung 27 gegenseitig und stellen auf diese Weise die lösbare Verbindung zwischen dem Hebel 26 und dem Trägerteil 19 her, wie dies Fig. 10 zeigt.

Um den Hebel 26 und den Trägerteil 19 in der Verstellungsrichtung der Bandführungseinrichtung 18 gegeneinander zu verspannen, ist hier eine als Drahtfeder ausgebildete Schenkelfeder 75 vorgesehen, die mit ihren Windungen auf einen am Hebel 26 angebrachten Stift 76 mit Vorspannung aufgeschoben ist. Der eine Schenkel 77 der Schenkelfeder 75 stützt sich an einem am Hebel 26 vorgesehenen Ansatz 78 ab, und der andere Schenkel 79 der Schenkelfeder greift an einer Stirnwand 80 des Trägerteiles 19 an. Hierdurch wird auf den Trägerteil eine im wesentlichen in der Verstellungsrichtung verlaufende Kraft ausgeübt. Auf diese einfache Weise sind der Hebel 26 und der Trägerteil 19 im wesentlichen in der Verstellungsrichtung spielfrei gegeneinander verspannt, wobei die Kupplungsanschläge 72 und 73 der lösbaren Kupplung 27 bei aus ihrer Betriebslage verstellter Bandführungseinrichtung 18 stets kraftschlüssig aneinander anliegen, wie dies auch aus den Fig. 9 und 10 zu ersehen ist, in denen die Bandführungseinrichtung in ihrer Ruhelage befindlich dargestellt ist. Auch in diesem Fall ist also sowohl in der Ruhelage als auch bei der Verstellung zwischen der Ruhelage und der Betriebslage auf besonders einfache und raumsparende Weise die räumliche Lage der Bandführungseinrichtung unmittelbar durch den als Antriebsteil vorgesehenen Hebel bestimmt.

Zur räumlichen Positionierung der Bandführungseinrichtung in ihrer Betriebslage weist die Positioniereinrichtung 46 eine im Positionsblock 48 im wesentlichen quer zur Verstellungsrichtung der Bandführungseinrichtung und parallel zur Plattenebene des Hebels 26 verlaufende U-förmige Positioniernut 81 auf, deren beide Seitenflächen 82 und 83 kurz vor Erreichen der Betriebslage mit den beiden Deckflächen 84 und 85 des Trägerteiles in Wirkverbindung treten, was einen ersten Schritt zur räumlichen Positionierung der Bandführungseinrichtung darstellt. Um ein leichtes und sicheres Einführen des Trägerteiles 19 in die Positioniernut 81 zu gewährleisten, ist im Anschluss an die Seitenfläche 82 der Positioniernut eine Auflaufschräge 86 vorgesehen, über die beim Verstellen des Trägerteiles 19 derselbe etwas vom Hebel 26 weg angehoben wird. Nachdem der Trägerteil 19 in die Positioniernut 81 eingedrungen ist, wird der Trägerteil mit seiner der vorerwähnten Stirnwand 80 gegenüberliegenden Stirnwand 87 so weit in die Positioniernut hineingeschoben, bis dieselbe an der Bodenfläche 88 der Positioniernut 81 anstösst, wobei zugleich ein an der Stirnwand 87 vorgesehener Positionierkeil 89 in einen in die Bodenfläche 88 der Positioniernut 81 mündenden V-förmigen Positioniereinschnitt 90 eindringt, was einen zweiten und letzten Schritt zur räumlichen Positionierung der Bandführungseinrichtung darstellt. Durch die in zwei Schritten erfolgende räumliche Positionierung der Bandführungseinrichtung ist dieselbe in ihrer räumlichen Position genau und sicher festgelegt, wie dies auch die Fig. 11 und 12 zeigen, in denen die Bandführungseinrichtung in ihrer Betriebslage befindlich dargestellt ist.

Auch in diesem Fall wird der Hebel 26 gegenüber dem Trägerteil 19 mit Überhub verstellt, wie dies aus den Fig. 11 und 12 ersichtlich ist. Bei dieser Verstellung mit Überhub wird die Kupplung 27 gelöst, wobei dann die beiden keilförmigen Kupplungsanschläge 72 und 73 entgegen der Wirkung der Schenkelfeder 75 voneinander abgehoben sind. Dadurch ist wieder erreicht, dass der Hebel 26 keinen Einfluss auf die in ihrer Betriebslage positionierte Bandführungseinrichtung 18 ausübt, was im Hinblick auf eine genaue und stets reproduzierbare räumliche Positionierung derselben vorteilhaft ist. Durch die Verstellung mit Überhub wird auch die Schenkelfeder 75 weiter gespannt und dieselbe hält dann die sich in ihrer Betriebslage befindende Bandführungseinrichtung 18 absolut sicher an die Positioniereinrichtung 46 kraftschlüssig angelegt. Die Schenkelfeder 75 erfüllt also auch in diesem Fall vorteilhafterweise eine Doppelfunktion.

Selbstverständlich sind für den Fachmann noch eine Reihe von Abwandlungen gegenüber den vorstehend veschriebenen Ausführungsbeispielen möglich, ohne dass der Rahmen der Erfindung verlassen wird. Dies gilt beispielsweise für die Ausbildung der lösbaren Kupplung, die auch zwei Paare von Kupplungsanschlägen aufweisen kann, die auf einer quer zur Verstellungsrichtung ausgerichteten Geraden liegen können. Auch für die Ausbildung der paarweise zusammenwirkenden Kupplungsanschläge gibt es verschiedene Möglichkeiten. Es sind ferner gegebenenfalls andere Arten von Federn verwendbar, und auch zwei oder mehrere Federn können Anwendung finden. Selbstverständlich gibt es auch verschiedene Möglichkeiten für die Ausbildung der Positioniereinrichtungen. So kann ein wie beim Gerät gemäss dem ersten Ausführungsbeispiel nach den Fig. 1 bis 8 in Verstellungsrichtung wirksamer, ein Auflager für die Bandführungseinrichtung bildender Anschlag auch durch einen separaten Anschlag und nicht durch einen eine Doppelfunktion übernehmenden Positioneranschlag gebildet sein. Die Bandführungseinrichtung kann um dieses Auflager dann auch nur in einer quer zur Verstellungsrichtung der Bandführungseinrichtung verlaufenden Schwenkrichtung unter der Wirkung der Feder verschwenkbar sein, wobei dann zur Positionierung der Bandführungseinrichtung nur zwei Paare von in dieser Schwenkrichtung wirksamen Positionieranschlägen vorgesehen sind. Selbstverständlich können auch mehrere der Positionieranschläge justierbar ausgebildet sein. Bei dem Gerät gemäss dem zweiten Ausführungsbeispiel nach den Fig. 9 bis 12 ist es auch möglich, Begrenzungsanschläge zur Begrenzung einer Relativbewegung der Trägerteile gegenüber den Antriebsteilen wie beim Gerät gemäss den Fig. 1 bis 8 vorzusehen. Bezüglich der Antriebsteile ist festzuhalten, dass diese nicht nur als schwenkbare Hebel, sondern auch als in Führungen verschiebbare Gleitteile, wie dies beispielsweise aus der eingangs angeführten AT-PS 362 161 bekannt ist, oder als im wesentlichen konzentrisch zur Bandführungstrommel angeordnete, gegeneinander verdrehbare Ringe ausgebildet sein können. Dabei kann auch nur eine Bandführungseinrichtung vorgesehen sein, die beispielsweise entlang einer die Bandführungstrommel sichelförmig umgreifenden, durch den betreffenden Antriebsteil festelegten Bewegungsbahn geführt ist. Auch für den Antrieb der Hebel stehen andere Möglichkeiten offen, wie etwa Zahnradantriebe, Zahnriemenantriebe oder Seiltriebe. Selbstverständlich ist es auch nicht notwendig, dass das Band in einer Kassette untergebracht in das Gerät eingesetzt ist.

## Patentansprüche

1. Aufzeichnungs- und/oder Wiedergabegerät für einen bandförmigen Aufzeichnungsträger (1) mit mindestens einer zwischen einer Ruhelage und einer Betriebslage entlang einer vorgegebenen Bewegungsbahn verstellbaren Bandführungseinrichtung (18, 18'), die mindestens eine auf einem Trägerteil (19, 19') angeordnete Bandführung aufweist und die zu ihrer räumlichen Positionierung in ihrer Betriebslage an eine Positioniereinrichtung (46, 46') kraftschlüssig angelegt gehalten ist und zu deren Verstellung ein von einer Antriebseinrichtung her antreibbarer Antriebsteil (26, 26') mit ihrem Trägerteil über eine lösbare Kupplung (27, 27') gekuppelt ist, wobei die Kupplung einander gegenüberliegende, in der Verstellungsrichtung wirksame Kupplungsanschläge (39, 39', 40, 40', 41, 41', 42, 42', 72, 72') aufweist, die bei einer Verstellung der Bandführungseinrichtung (18, 18') kraftschlüssig aneinander anliegen und in deren Betriebslage voneinander abgehoben sind (26, 26'), dadurch gekennzeichnet, dass zwischen dem Antriebsteil (26, 26') und dem Trägerteil (19, 19') mindestens eine Feder (45, 45'; 75) wirksam ist, die den Antriebsteil und den Trägerteil im wesentlichen in der Verstellungsrichtung gegeneinander verspannt, wobei die Kupplungsanschläge (39, 40, 41, 42, 39', 40', 41', 42', 72, 73) bei aus ihrer Betriebslage verstellter Bandführungseinrichtung (10, 10') stets kraftschlüssig aneinander anliegen, und die bei sich in der Betriebslage befindender Bandführungseinrichtung diese an die Positioniereinrichtung (46, 46') kraftschlüssig angelegt hält, wobei der Antriebsteil (26, 26') gegenüber dem Trägerteil (19, 19') bei gelöster Kupplung (27, 27') mit Überhub verstellt ist.

2. Gerät nach Anspruch 1, dadurch gekennzeichnet, dass als Feder eine auf Zug beanspruchte, im wesentlichen in der Verstellungsrichtung gespannte Schraubenfeder (45, 45') vorgesehen ist, die mit ihren beiden Enden einerseits am Antriebsteil und andererseits am Trägerteil eingehängt ist.

3. Gerät nach Anspruch 1 oder 2, dadurch gekennzeichnet dass zur Kupplung des Trägerteiles (19, 19') mit dem Antriebsteil (26, 26') zwei quer zur Verstellungsrichtung mit Normalabstand zueinander liegende Paare von Kupplungsanschlägen (39, 40, 41, 42, 39', 40', 41', 42') vorgesehen sind.

4. Gerät nach Anspruch 3, dadurch gekennzeichnet, dass die zwei Paare von Kupplungsanschlägen (39-42, 39'-42') zusätzlich in Verstellungsrichtung mit Normalabstand zueinander liegen.

5. Gerät nach Anspruch 3 oder 4, dadurch gekennzeichnet, dass ein Paar von Kupplungsanschlägen (39, 40, 39', 40') als einen Kupplungsanschlag einen im wesentlichen V-förmigen (39, 39') Einschnitt und als anderen Kupplungsanschlag einen in den V-förmigen Einschnitt eingreifenden zylinderförmigen Stift (40, 40') aufweist.

6. Gerät nach Anspruch 5, dadurch gekennzeichnet, dass das andere Paar von Kupplungsanschlägen (41, 42, 41', 42') als einen Kupplungsanschlag eine ebene Stützfläche (41, 41') und als anderen Kupplungsanschlag ebenfalls einen an der ebenen Stützfläche angreifenden zylinderförmigen Stift (42, 42') aufweist.

7. Gerät nach den Ansprüchen 5 und 6, dadurch gekennzeichnet, dass die beiden zylinderförmigen Stifte (40, 42, 40', 42') gemeinsam an einem der beiden über die lösbare Kupplung (27, 27') zu kuppelnden Teile (19, 26, 19', 26') und der V-förmige Einschnitt (39, 39') und die ebene Stützfläche (41, 41') am anderen der beiden zu kuppelnden Teile vorgesehen sind.

8. Gerät nach Anspruch 7, dadurch gekennzeichnet, dass der Antriebsteil (26, 26') plattenförmig ausgebildet ist und der V-förmige Einschnitt (39, 39') und die ebene Stützfläche (41, 41') durch Begrenzungswände von mindestens einer den plattenförmigen Antriebsteil durchsetzenden Ausnehmung (43, 44, 43', 44') gebildet sind, durch die die am Trägerteil (19, 19') vorgesehenen zylinderförmigen Stifte (40, 42, 40', 42') hindurchgeführt sind.

9. Gerät nach einem der Ansprüche 5 bis 8, dadurch gekennzeichnet, dass bei Ausbildung eines Kupplungsanschlages als an einem der beiden über die lösbare Kupplung (27, 27') zu kuppelnden Teile (19, 26, 19', 26') vorgesehener zylinderförmiger Stift (40, 42, 40', 42') dieser ein hakenförmig abgewinkeltes freies Ende aufweist, mit dem er den anderen der beiden zu kuppelnden Teile umgreift.

10. Gerät nach einem der vorhergehenden Ansprüche, bei dem die Positioniereinrichtung für die Bandführungseinrichtung einen im wesentlichen in der Verstellungsrichtung wirksamen Anschlag aufweist, dadurch gekennzeichnet, dass der in der Verstellungsrichtung wirksame Anschlag (50, 52') der Positioniereinrichtung (46, 46') ein Auflager für die Bandführungseinrichtung (18, 18') bildet, um das die Bandführungseinrichtung in mindestens einer im wesentlichen quer zur Verstellungsrichtung verlaufenden Schwenkrichtung (51, 53, 51', 53') verschwenkbar ist, dass die am Trägerteil (19, 19') der Bandführungseinrichtung (18, 18') angreifende Feder (45, 45') die sich in ihrer Betriebslage befindende Bandführungseinrichtung (18, 18') um das Auflager verschwenkt und dass zur Positionierung der verschwenkten Bandführungseinrichtung die Positioniereinrichtung (46, 46') und die Bandführungseinrichtung mindestens zwei mit Abstand zueinander liegende Paare von im wesentlichen in Schwenkrichtung (51, 53, 51', 53') der Bandführungseinrichtung um das Auflager wirksamen, miteinander zusammenwirkenden Positionieranschlägen (50, 23, 55, 56, 57, 58, 59, 60, 50', 23', 55', 56', 57', 58', 59', 60') aufweisen.

11. Gerät nach Anspruch 10, dadurch gekennzeichnet, dass der in der Verstellungsrichtung wirksame, ein Auflager für die Bandführungseinrichtung (18, 18') bildende Anschlag durch einen an der Positioniereinrichtung vorgesehenen Positionieranschlag (50, 50') eines Paares von Positionieranschlägen (50, 23, 50', 23') gebildet ist.

12. Gerät nach einem der vorhergehenden Ansprüche, dadurch gekennzeichnet, dass bei aus ihrer Betriebslage verstellter Bandführungseinrichtung (18, 18') zur Begrenzung einer Relativbewegung des Trägerteiles (19, 19') gegenüber dem Antriebsteil (26, 26') bei zumindest teilweiser Lösung der Kupplung (27, 27') entgegen der Kraft der Feder (45, 45') mindestens ein Paar von miteinander zusammenwirkenden Begrenzungsanschlägen (63-66, 70, 63'-66', 70') vorgesehen ist, wobei von den paarweise miteinander zusammenwirkenden Begrenzungsanschlägen der eine Begrenzungsanschlag (63, 65, 67, 63', 65', 67') am Trägerteil (19, 19') vorgesehen ist.

13. Gerät nach Anspruch 12, dadurch gekennzeichnet, dass von mindestens einem Paar von Begrenzungsanschlägen (63-66, 63'-66') der andere Begrenzungsanschlag (64, 66, 64', 66') am Antriebsteil (26, 26') vorgesehen ist.

14. Gerät nach Anspruch 12, dadurch gekennzeichnet, dass von mindestens einem Paar von Begrenzungsanschlägen (67, 70, 67', 70') der andere Begrenzungsanschlag (70, 70') geräteseitig ortsfest im Bereich der Bewegungsbahn der Bandführungseinrichtung (18, 18') vorgesehen ist.

15. Gerät nach Anspruch 14, dadurch gekennzeichnet, dass der andere Begrenzungsanschlag durch eine im wesentlichen durchgehend sich entlang der Bewegungsbahn der Bandführungseinrichtung (18, 18') erstreckende Anschlagfläche (70, 70') gebildet ist.

## Claims

1. A recording and/or reproducing apparatus for use in conjunction with a record carrier (1) in the form of a tape, which apparatus comprises at least one tape-guide device (18, 18') which is movable between a rest position and an operating position along a predetermined path of movement, which comprises at least one tape guide arranged on a supporting member (19, 19'), which is kept in force-sustained engagement with a positioning device (46, 46') for positioning it in its operating position and for whose movement a drive member (26, 26') which is drivable by a driving device, is coupled to its supporting member via a disengageable coupling (27, 27') which comprises facing coupling abutments (39, 39', 40, 40', 41, 41', 72, 72') which act in the direction of movement of the tape-guide device, which are in force-sustained engagement with each other during a movement of the tape-guide device (18, 18') and which are disengaged from each other in the operating position of the tape-guide device, characterized in that at least one spring (45, 45'; 75) acts between the drive member (26, 26') and the supporting member (19, 19') and tensions the drive member and the supporting member relative to each other substantially in the direction of movement, the coupling abutments (39, 40, 41, 42, 39', 40', 41', 42'; 72, 73) always being in force-sustained engagement with each other when the tape-guide device (18, 18') is out of its operating position, which spring keeps the tape-guide device in force-sustained engagement with the positioning device (46, 46') when the tape-guide device is in its operating position, the drive member (26, 26') being moved with overtravel relative to the supporting member (19, 19') when the coupling (27, 27') is disengaged.

2. An apparatus as claimed in Claim 1, characterized in that the spring is a helical spring (45, 45') which is loaded in tension and which is tensioned substantially in the direction of movement, the ends of the spring being attached to the drive member and to the supporting member respectively.

3. An apparatus as claimed in Claim 1 or 2, characterized in that for coupling the supporting member (19, 19') to the drive member (26, 26') there are provided two pairs of coupling abutments (39, 40, 41, 42, 39', 40', 41', 42') which are spaced a normal distance from each other transversely of the direction of movement.

4. An apparatus as claimed in Claim 3, characterized in that, in addition, the two pairs of coupling abutments (39-42, 39'-42') are spaced a normal distance from each other in the direction of movement.

5. An apparatus as claimed in Claim 3 or 4, characterized in that one pair of coupling abutments (39, 40, 39', 40') comprises one coupling abutment formed with a substantially V-shaped recess (39, 39'), the other coupling abutment being a cylindrical pin (40, 40') which engages the V-shaped recess.

6. An apparatus as claimed in Claim 5, characterized in that the other pair of coupling abutments (41, 42, 41', 42') comprises one coupling abutment in the form of a flat abutment surface (41, 41'), the other coupling abutment being a cylindrical pin (42, 42') which co-operates with the flat abutment surface.

7. An apparatus as claimed in Claims 5 and 6, characterized in that the two cylindrical pins (40, 42, 40', 42') are both arranged on one of the two members (19, 26, 19', 26') to be coupled via the disengageable coupling (27, 27'), and the V-shaped recess (39, 39') and the flat abutment surface (41, 41') are formed on the other one of the two members to be coupled.

8. An apparatus as claimed in Claim 7, characterized in that the drive member (26, 26') is plate-shaped and the V-shaped recess (39, 39') and the flat abutment surface (41, 41') are formed by bounding walls of at least one aperture (43, 44, 43', 44') formed in the plate-shaped drive member, through which aperture the cylindrical pins (40, 42, 40', 42') on the supporting member (19, 19') extend.

9. An apparatus as claimed in any of the Claims 5 to 8, characterized in that a couping abutment in the form of a cylindrical pin (40, 42, 40', 42') on one of the two members (19, 26, 19', 26') to be coupled by the disengageable coupling (27, 27') has a hook-shaped free end which engages around the other one of the two members to be coupled.

10. An apparatus as claimed in any of the preceding Claims, in which the positioning device for the tape-guide device comprises an abutment which is operative substantially in the direction of movement of the tape-guide device, characterized in that the abutment (50, 52) of the positioning-device (46, 46') which acts in the direction of movement forms a fulcrum for the tape-guide device (18, 18'), about which the tape-guide device is pivotable in at least one pivoting direction (51, 53, 51', 53') substantially transversely of the direction of movement, the spring (45, 45') which acts on the supporting member (19, 19') of the tape-guide device (18, 18') pivots the tape-guide device (18, 18') which is in its operating position about the fulcrum, and for positioning the pivoted tape-guide device the positioning device (46, 46') and the tape-guide device comprise at least two pairs of positioning abutments (50, 23, 55, 56, 57, 58, 59, 60, 50', 23', 55', 56', 57', 58', 59', 60') which are operative substantially in the same direction (51, 53, 51', 53') in which the tape-guide device is pivoted about the fulcrum, which are spaced from each other, and will co-operate with each other.

11. An apparatus as claimed in Claim 10, characterized in that the abutment which forms a fulcrum for the tape-guide device (18, 18') and which is operative in the direction of movement is formed by one positioning abutment (50, 50') of a pair of positioning abutments (50, 23, 50', 23') provided on the positioning device.

12. An apparatus as claimed in any of the preceding Claims, characterized in that for limiting a movement of the supporting member (19, 19') relative to the drive member (26, 26') when the tape-guide device (18, 18') is out of its operating position and the coupling (27, 27') is at least partly disengaged against the force of the spring (45, 45'), there is provided at least one pair of co-operating limiting stops (63-66, 70, 63'-66', 70') one limiting stop (63, 65, 67, 63', 65', 67') of the pair-wise co-operating limiting stops being arranged on the supporting member (19, 19').

13. An apparatus as claimed in Claim 12, characterized in that the other limiting stop (64, 66, 64', 66') of at least one pair of limiting stops (63-66, 63'-66') is arranged on the drive member (26, 26').

14. An apparatus as claimed in Claim 12, characterized in that the other limiting stop (70, 70') of at least one pair of limiting stops (67, 70, 67', 70') is a stationary stop arranged on the apparatus in the path of movement of the tape-guide device (18, 18').

15. An apparatus as claimed in Claim 14, characterized in that the other limiting stop is formed as a stop surface (70, 70') which extends along substantially the entire path of movement of the tape-guide device (18, 18').

## Revendications

1. Appareil d'enregistrement et/ou de reproduction pour un support d'enregistrement (1) en forme de bande, comprenant au moins un dispositif guide-bande (18, 18') mobile entre une position de repos et une position de travail suivant un trajet prédéfini, qui comprend au moins un organe de guidage de bande monté sur un élément de support (19, 19') qui, en vue de son positionnement dans l'espace dans sa position de travail, est maintenu en contact à transfert de force, avec un dispositif positionneur (46, 46') et dont le déplacement est assuré par un organe d'entraînement (26, 26') qui peut être entraîné par un dispositif d'entraînement et qui est couplé à son élément de support par l'intermédiaire d'un accouplement libérable (27, 27') comprenant des butées d'accouplement opposées (39, 39', 40, 40', 41, 41', 42, 42', 72, 72') qui sont actives dans le sens du déplacement, ces butées étant en contact à transfert de force pendant un déplacement du dispositif guide-bande (18, 18') et étant dégagées l'une de l'autre dans la position de travail de ce dispositif, caractérisé en ce qu'entre l'organe d'entraînement (26, 26') et l'élément de support (19, 19'), agit au moins un ressort (45, 45', 75) qui sollicite l'organe d'entraînement et l'élément de support l'un par rapport à l'autre en substance dans la direction de déplacement, de sorte que les butées d'accouplement (39, 40, 41, 42, 39', 40', 41', 42', 72, 73) sont toujours en contact à transfert de force l'une avec l'autre lorsque le dispositif guide-bande (18, 18') est écarté de sa position de travail, et qui, lorsque le dispositif guide-bande se trouve dans sa position de travail, le maintient en contact à transfert de force avec le dispositif positionneur (46, 46'), de sorte que l'organe d'entraînement (26, 26') est déplacé avec un dépassement de course par rapport à l'élément de support (19, 19') lorsque l'accouplement (27, 27') est libéré.

2. Appareil suivant la revendication 1, caractérisé en ce que le ressort est un ressort hélicoïdal (45, 45') qui est sollicité en traction et tendu en substance dans la direction de déplacement, les deux extrémités du ressort étant accrochées respectivement à l'organe d'entraînement et à l'élément de support.

3. Appareil suivant la revendication 1 ou 2, caractérisé en ce qu'en vue de l'accouplement de l'élément de support (19, 19') à l'organe d'entraînement (26, 26'), deux paires de butées d'accouplement (39, 40, 41, 42, 39', 40', 41', 42') sont prévues et espacées l'une de l'autre dans la direction de déplacement du dispositif guide-bande.

4. Appareil suivant la revendication 3, caractérisé, en outre, en ce que deux paires de butées d'accouplement (39 à 42, 39' à 42') sont espacées l'une de l'autre transversalement à la direction de déplacement du dispositif guide-bande.

5. Appareil suivant la revendication 3 ou 4, caractérisé en ce qu'une paire de butées d'accouplement (39, 40, 39', 40') comprend une butée d'accouplement présentant une entaille en substance en forme de V, (39, 39'), l'autre butée d'accouplement étant un doigt/cylindrique (40, 40') qui s'engage dans l'entaille en V.

6. Appareil suivant la revendication 5, caractérisé en ce que l'autre paire de butées d'accouplement (41, 42, 41', 42') comprend une butée d'accouplement ayant la forme d'une surface d'appui plane (41, 41'), l'autre butée d'accouplement étant un doigt cylindrique (42, 42') qui attaque la surface d'appui plane.

7. Appareil suivant les revendications 5 et 6, caractérisé en ce que les deux doigts cylindriques (40, 42, 40', 42') sont disposés ensemble sur un des deux éléments (19, 20, 19', 20') à accoupler par l'intermédiaire de l'accouplement libérable (27, 27'), et l'entaille en V (39, 39') ainsi que la surface d'appui plane (41, 41') sont formées sur l'autre des deux éléments à accoupler.

8. Appareil suivant la revendication 7, caractérisé en ce que l'organe d'entraînement (26, 26') a la forme d'une plaque, et l'entaille en V (39, 39') ainsi que la surface d'appui plane (41, 41') sont formées par des parois de délimitation d'au moins une découpe ménagée dans l'organe d'entraînement en forme de plaque (43, 44, 43', 44') à travers laquelle s'étendent les doigts cylindriques (40, 42, 40', 42') prévus sur l'élément de support (19, 19').

9. Appareil suivant l'une quelconque des revendications 5 à 8, caractérisé en ce que lorsqu'une butée d'accouplement a la forme d'un doigt cylindrique (40, 42, 40', 42') prévu sur l'un ou les deux éléments (19, 26, 19', 26') à accoupler par l'intermédiaire de l'accouplement libérable (27, 27'), ce doigt comporte une extrémité libre coudée en forme de crochet qui enserre l'autre des deux éléments à accoupler.

10. Appareil suivant l'une quelconque des revendications précédentes, dans lequel le dispositif positionneur pour le dispositif guide-bande comporte une butée qui est active en substance dans la direction de déplacement, caractérisé en ce que la butée (50, 52') du dispositif positionneur (46, 46'), qui agit dans la direction de déplacement, forme un point d'appui pour le dispositif guide-bande (18, 18'), autour duquel le dispositif guide-bande peut pivoter dans au moins une direction de pivotement (51, 53, 51', 53') s'étendant en substance perpendiculairement à la direction de déplacement, que le ressort (45, 45') qui agit sur l'élément de support (19, 19') du dispositif guide-bande (18, 18') fait pivoter le dispositif guide-bande (18, 18') autour du point d'appui et que, pour positionner le dispositif guide-bande qui a pivoté, le dispositif positionneur (46, 46') et le dispositif guide-bande comprennent au moins deux paires de butées de positionnement (50, 23, 55, 56, 57, 58, 59, 60, 50', 23', 55', 56', 57', 58', 59', 60') qui sont actives en substance dans la direction de pivotement (51, 53, 51', 53') du dispositif guide-bande autour du point d'appui, espacées l'une de l'autre et coopérant l'une avec l'autre.

11. Appareil suivant la revendication 10, caractérisé en ce que la butée formant un point d'appui pour le dispositif guide-bande (18, 18'), qui est active dans la direction de déplacement, est formée par une butée de positionnement (50, 50') d'une paire de butées de positionnement (50, 23, 50', 23') prévue sur le dispositif positionneur.

12. Appareil suivant l'une quelconque des revendications précédentes, caractérisé en ce que pour limiter un déplacement de l'élément de support (19, 19') par rapport à l'organe d'entraînement (26, 26'), lorsque le dispositif guide-bande (18, 18') est écarté de sa position de travail et que l'accouplement (27, 27') est au moins partiellement libéré à l'encontre de la force du ressort (45, 45'), au moins une paire de butées de fin de course coopérantes (63 à 66, 70, 63' à 66', 70') est prévue, l'une des butées de fin de course (63, 65, 67, 63', 65', 67') des butées de fin de course coopérant par paires étant disposée sur l'élément de support.

13. Appareil suivant la revendication 12, caractérisé en ce que l'autre butée de fin de course (64, 66, 64', 66') d'au moins une paire de butées de fin de course (63 à 66, 63' à 66') est disposée sur l'organe d'entraînement (26, 26').

14. Appareil suivant la revendication 12, caractérisé en ce que l'autre butée de fin de course (70, 70') d'au moins une paire de butées de fin de course (67, 70, 67', 70') est une butée fixe prévue sur l'appareil dans le trajet de déplacement du dispositif guide-bande (18, 18').

15. Appareil suivant la revendication 14, caractérisé en ce que l'autre butée de fin de course est formée par une surface de butée (70, 70') qui s'étend en substance le long de la totalité du trajet de déplacement du dispositif guide-bande (18, 18').

Fig.1

Fig.2

Fig.3

Fig.4

Fig.5

Fig.6

4

Fig.7

Fig.8

Fig.9

Fig.10

Fig.11

Fig.12

0 074 148